(19) **Europäisches Patentamt / European Patent Office / Office européen des brevets**

(11) **EP 3 992 315 B1**

(12) **EUROPEAN PATENT SPECIFICATION**

(45) Date of publication and mention
of the grant of the patent:
**15.01.2025  Bulletin 2025/03**

(21) Application number: **20832187.7**

(22) Date of filing: **26.06.2020**

(51) International Patent Classification (IPC):
$C21D\ 1/25^{(2006.01)}$       $B32B\ 15/01^{(2006.01)}$
$C21D\ 1/02^{(2006.01)}$       $C21D\ 1/19^{(2006.01)}$
$C21D\ 6/00^{(2006.01)}$       $C21D\ 8/02^{(2006.01)}$
$C21D\ 9/46^{(2006.01)}$       $C22C\ 38/00^{(2006.01)}$
$C22C\ 38/02^{(2006.01)}$      $C22C\ 38/04^{(2006.01)}$
$C22C\ 38/06^{(2006.01)}$      $C22C\ 38/08^{(2006.01)}$
$C22C\ 38/10^{(2006.01)}$      $C22C\ 38/12^{(2006.01)}$
$C22C\ 38/14^{(2006.01)}$      $C22C\ 38/16^{(2006.01)}$
$C22C\ 38/18^{(2006.01)}$      $C23C\ 2/06^{(2006.01)}$
$C23C\ 2/40^{(2006.01)}$       $C25D\ 7/06^{(2006.01)}$

(52) Cooperative Patent Classification (CPC):
C23C 30/00; B32B 15/013; C21D 1/02; C21D 1/19;
C21D 1/25; C21D 6/005; C21D 8/021;
C21D 8/0226; C21D 8/0236; C21D 8/0263;
C21D 8/0273; C21D 9/46; C22C 38/002;
C22C 38/005; C22C 38/008;            (Cont.)

(86) International application number:
**PCT/JP2020/025352**

(87) International publication number:
**WO 2020/262651 (30.12.2020 Gazette 2020/53)**

(54) **STEEL SHEET**

STAHLBLECH

TÔLE D'ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.06.2019  JP 2019121092
28.06.2019  JP 2019121093**

(43) Date of publication of application:
**04.05.2022  Bulletin 2022/18**

(73) Proprietor: **NIPPON STEEL CORPORATION**
**Chiyoda-ku**
**Tokyo 100-8071 (JP)**

(72) Inventors:
• **NAKANO, Katsuya**
**Tokyo 100-8071 (JP)**
• **TAKEDA, Kengo**
**Tokyo 100-8071 (JP)**
• **KAWATA, Hiroyuki**
**Tokyo 100-8071 (JP)**
• **UENISHI, Akihiro**
**Tokyo 100-8071 (JP)**
• **SUZUKI, Yuya**
**Tokyo 100-8071 (JP)**

(74) Representative: **Zimmermann & Partner**
**Patentanwälte mbB**
**Postfach 330 920**
**80069 München (DE)**

(56) References cited:
EP-A1- 3 467 135          WO-A1-2014/077294
JP-A- 2011 179 030        JP-A- 2014 019 926
JP-A- 2016 084 520        US-A1- 2016 177 414
US-A1- 2017 101 695

• N.N.: "Standard Practice for Using Significant Digits in Test Data to Determine Conformance with Specifications", AMERICAN NATIONAL STANDARD, 1 January 2013 (2013-01-01), West Conshohocken, PA, XP055297340, Retrieved from the Internet <URL:http://www.galvanizeit. com/uploads/ASTM-E-29-yr-13.pdf> [retrieved on 20160824], DOI: 10.1520/E0029-13

(52) Cooperative Patent Classification (CPC): (Cont.)
**C22C 38/02; C22C 38/04; C22C 38/06; C22C 38/08; C22C 38/10; C22C 38/12; C22C 38/14; C22C 38/16; C22C 38/18; C22C 38/60; C23C 2/06; C23C 2/40; C25D 7/0614;** C21D 2211/008

**Description**

TECHNICAL FIELD

The present invention relates to a steel sheet.

BACKGROUND ART

In order to ensure safety of an automobile at a time of collision and weight reduction, members of an automobile structure are required to establish compatibility between high strength and excellent crash resistance.

Patent Document 1 (JP2013-227614A) describes a high-strength steel sheet made to have a tensile strength of 1470 MPa or more after hot stamping by heating a cold-rolled steel sheet having a predetermined chemical composition at a heating rate of 5 to 100°C/s to a temperature range of an $Ac_3$ point or more to 950°C or less and cooling, after heating, the steel sheet through a temperature range of $Ar_3$ to 350°C at a cooling rate of 50°C/s or more.

Patent Document 2 (JP2015-117403A) describes a high-strength galvanized steel sheet of which a value obtained by subtracting a Vickers hardness at a 20-$\mu$m-depth point from a surface of the steel sheet from a Vickers hardness at a 100-$\mu$m point from the surface of the steel sheet ($\triangle$Hv) is 30 or more, and describes a method for producing the high-strength galvanized steel sheet.

Patent Documents 3 and 4 each describe a cold-rolled steel sheet having a predetermined chemical composition.

Patent Document 5 discloses a steel sheet which has a tensile strength of 900 MPa or higher and excellent weldability, and a method for producing the steel sheet. The steel sheet is characterized by having a specific composition and a microstructure containing, in terms of area fraction, ferrite of 30% or less (including 0%), tempered martensite of 70% or more (including 100%), and the balance other than ferrite and the tempered martensite of 10% or less (including 0%) in total, the tempered martensite having an average grain size thereof is 5 $\mu$m or lower, the tempered martensite having iron-based carbides, which have average particle sizes of 100 nm or less, precipitated on grain boundaries, and the tempered martensite containing, in terms of atomic concentration, 5 atom% or more in total of Si and Mn on the grain boundaries of the tempered martensite. The steel sheet is further characterized by having a tensile strength of 900 MPa or higher.

LIST OF PRIOR ART DOCUMENTS

PATENT DOCUMENT

Patent Document 1: JP2013-227614A
Patent Document 2: JP2015-117403A
Patent Document 3: WO 2009/110607
Patent Document 4: JP2009-215571A
Patent Document 5: EP 3 467 135 A1

SUMMARY OF INVENTION

TECHNICAL PROBLEM

According to the invention described in Patent Document 1, the steel sheet has an excellent effect in that a high-strength component is obtained; however, there is a need for a steel sheet that has improved tensile strength and improved crash resistance.

According to the invention described in Patent Document 2, the steel sheet includes a microstructure containing, in volume fraction, 20 to 50% of tempered martensite, and thus a sufficient hardness is not obtained, which results in degraded crash resistance.

The invention described in each of Patent Documents 3 and 4 involves a two-step heat treatment; however, a temperature of first heat treatment is as high as 1100 to 1200°C. Thus, a sufficient hardness is not obtained, which results in degraded crash resistance.

In order to ensure crash resistance, it is important to restrain cracks from being formed and propagating. For restraining cracks from being formed and propagating, it has been conceived to uniformize a steel micro-structure of a steel sheet, specifically, to form the steel micro-structure into a single structure. A steel micro-structure of the high-strength component described in Patent Document 1 is substantially a single martensite phase and therefore can be considered to be substantially uniform, from a steel micro-structure viewpoint.

However, as a result of more elaborate studies, the present inventors found that crash resistance can be more improved by decreasing not only variations in a steel micro-structure but also variations in hardness.

An objective of the present invention is to provide a steel sheet that establishes compatibility between high strength and excellent crash resistance.

SOLUTION TO PROBLEM

First, the present inventors measured both Vickers hardnesses (macro hardnesses) and nano hardnesses (micro hardnesses) of various kinds of steel sheets in their cross sections parallel to a sheet-thickness direction (hereinafter, referred to as a sheet-thickness cross section). As a result, it was revealed that a steel sheet excellent in crash resistance has small variations in both macro hardness and micro hardness as compared with a steel sheet poor in crash resistance. It is considered that such unevenness in macro and micro hardnesses is attributable to coarse carbide produced in hot rolling.

Hence, the present inventors conducted further studies about how to reduce coarse carbide. In general, coarse carbide is difficult to dissolve through a typical heat treatment cycle. In particular, dissolving of carbide in which an alloying element such as Mn is concentrated is significantly delayed in a typical heat treatment cycle. For accelerating the dissolving of carbide, increasing a heating temperature and a heating duration is useful. It was however confirmed that adjustment of a heating temperature and a heating duration within ranges under heat treatment conditions manageable in a real operation results in a little effect of accelerating the dissolving of carbide.

Dissolving of carbide is a phenomenon attributable to diffusion of elements. The present inventors paid attention to the fact that diffusion coefficients of elements are higher in grain boundary diffusion in which grain boundaries serve as diffusion paths than in intraparticle diffusion in which elements diffuse inside grains. In order to utilize the grain boundary diffusion usefully, the present inventors then attempted to utilize martensite, which includes grain boundaries in a large quantity. Specifically, it was confirmed that coarse carbide was reduced by performing multi-step heat treatment, in which heat treatment to obtain a martensitic steel micro-structure including grain boundaries in a large quantity is performed, and then heat treatment is performed again. It was additionally confirmed that, by setting a coiling temperature after hot rolling at 550°C or less, it is possible to reduce an amount of carbide after the hot rolling and to restrain alloying elements from concentrating in carbide.

In addition, the present inventors found that crash resistance can be further improved by increasing bendability of a steel sheet. When a steel sheet is subjected to bending deformation, while large tensile stress is applied to a bending-outer-circumferential near-surface portion in a circumferential direction, large compressive stress is applied to a bending-inner-circumferential near-surface portion. By providing a soft layer in an outer layer of a steel sheet, tensile stress and compressive stress occurring in the outer layer of the steel sheet in bending deformation of the steel sheet can be mitigated, which makes it possible to improve bendability of the steel sheet. The present inventors found that bendability of a steel sheet can be further improved by providing a soft layer in an outer layer of the steel sheet and increasing uniformity in hardness in the soft layer.

The present invention obtained in this manner is as described in the appended claims.

ADVANTAGEOUS EFFECTS OF INVENTION

According to the present invention, a steel sheet that establishes compatibility between high strength and excellent crash resistance is obtained.

BRIEF DESCRIPTION OF DRAWINGS

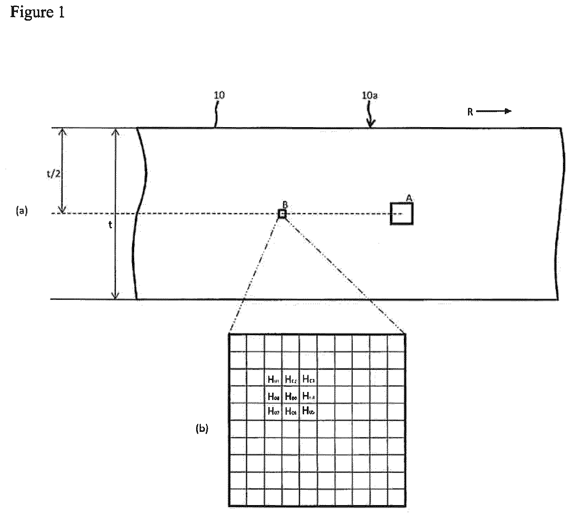

[Figure 1] Figure 1 is a diagram schematically illustrating locations and regions for measuring hardnesses of a steel sheet. Figure 1(a) is a diagram illustrating a part of a cross section of the steel sheet, and Figure 1(b) is an enlarged view of a region B illustrated in Figure 1(a).

DESCRIPTION OF EMBODIMENTS

An embodiment of the present invention will be described below.

(Steel Micro-Structure)

A steel micro-structure of a steel sheet according to the present embodiment will be described. The steel micro-structure of the steel sheet according to the present embodiment contains, in volume fraction, tempered martensite: 95% or more, and one or more kinds of ferrite, pearlite, bainite, as-quenched martensite, and retained austenite: less than 5% in total.

With 95% or more of tempered martensite, the steel sheet can have sufficient strength. From this viewpoint, 98% or more of tempered martensite is preferably contained.

In addition, less than 5% of one or more kinds of ferrite, pearlite, bainite, as-quenched martensite, and retained austenite, in total, is allowed.

(Macro Hardness)

Next, hardnesses of the steel sheet according to the present embodiment will be described. Figure 1(a) and Figure 1(b) schematically illustrate locations and regions for measuring hardnesses of a steel sheet. Figure 1(a) illustrates a part of a cross section of a steel sheet 10 according to the present embodiment, where the cross section is parallel to a sheet-thickness direction (a sheet-thickness cross section parallel to a rolling direction R). Figure 1(b) is an enlarged view of a region B illustrated in Figure 1(a).

A macro hardness of the steel sheet according to an embodiment is measured in a region A illustrated in Figure 1(a). When a sheet thickness of the steel sheet 10 is denoted by t, the region A is a 300-$\mu$m-square region that is set in a cross section parallel to the sheet-thickness direction of the steel sheet 10 and is centered about a t/2 point from a surface 10a of the steel sheet 10. At the region A, Vickers hardnesses are measured under a load of 9.8 N at 30 randomly selected points, and a standard deviation of these Vickers hardnesses is determined. The steel sheet according to the present embodiment should make this standard deviation 30 or less. The macro hardness tends to vary if coarse carbides are formed. For that reason, small variations in macro hardness can serve as an indicator of restraint on formation of coarse carbides. By making the standard deviation 30 or less, variations in macro hardness attributable to coarse carbides are decreased, so that crash resistance of the steel sheet can be improved. When an operation of determining the standard deviation of Vickers hardnesses as described above is performed in the same manner at five regions, an arithmetic average value of standard deviations of the regions is preferably 30 or less, and the arithmetic average value is more preferably 25 or less. A fracture that occurs when a steel sheet suffers tensile stress tends to occur from a sheet-thickness center portion. For that reason, it is preferable that variations in hardness are small at the t/2 point. The Vickers hardnesses are thus measured in the region centered about the t/2 point.

(Micro Hardness)

A micro hardness of the steel sheet according to an embodiment is measured in the region B illustrated in Figure 1(a) and Figure 1(b). When the sheet thickness of the steel sheet 10 is denoted by t, the region B is a 100-$\mu$m-square region that is set in a cross section parallel to the sheet-thickness direction of the steel sheet 10 and is centered about a t/2 point from a surface 10a of the steel sheet 10. The region B is divided into 10×10, 100 subregions of equal size, and at a center of each subregion, a nano hardness is measured under a maximum load of 1 mN. That is, the nano hardness is measured under a maximum load of 1 mN at 100 points. Out of the subregions, the number of subregions each of which makes a difference in nano hardness of 3 GPa or more from any one of its eight surrounding subregions should be 10 or less. This will be described below in detail.

As illustrated in Figure 1(b), if a nano hardness in a given subregion is denoted by $H_{00}$, eight subregions that surround the given subregion are the "eight surrounding subregions". If nano hardnesses of the subregions are denoted by $H_{01}$, $H_{02}$, $H_{03}$, $H_{04}$, $H_{05}$, $H_{06}$, $H_{07}$, and $H_{08}$, differences in nano hardness are calculated as $|H_{00} - H_{01}|$, $|H_{00} - H_{02}|$, $|H_{00} - H_{03}|$, $|H_{00} - H_{04}|$, $|H_{00} - H_{05}|$, $|H_{00} - H_{06}|$, $|H_{00} - H_{07}|$, and $|H_{00} - H_{08}|$. If any one of the eight differences is 3 GPa or more, the given subregion is determined as "a subregion that makes a difference in nano hardness of 3 GPa or more from any one of its eight surrounding subregions". This operation is performed on 64 subregions, excluding outermost subregions in the region B, and the number of "subregions each of which makes a difference in nano hardness of 3 GPa or more from any one of its eight surrounding subregions" is determined. The steel sheet according to the present embodiment should make this number ten or less. The number is preferably eight or less. Furthermore, the operation of determining nano hardness described above is performed similarly on five regions, and an arithmetic average value of numbers described above is preferably ten or less, and more preferably eight or less. It is considered that variations in micro hardness being small in this manner make variations in hardness attributable to segregation of an element small, and crash resistance of the steel sheet can be improved. Note that the reason for measuring nano hardness in the region centered about the t/2 point is the same as in the measurement of the macro hardness.

(Tensile Strength)

A tensile strength of the steel sheet according to the present embodiment is 1100 MPa or more. In particular, the tensile strength is preferably 1200 MPa or more, more preferably 1400 MPa or more, and still more preferably 1470 MPa or more. The tensile strength of the steel sheet according to the present invention is determined by a tensile test. Specifically, the tensile test is performed in conformance with JIS Z 2241(2011) and using JIS No. 5 test coupons that are taken from the steel sheet in a direction perpendicular to a rolling direction of the steel sheet, and the maximum of measured tensile strengths is determined as the tensile strength of the steel sheet.

(Chemical Composition)

Next, a chemical composition of the steel sheet according to the present embodiment will be described. Note that the symbol "%" for a content of each element means "mass%."

C: 0.18% or more to 0.40% or less

C (carbon) is an element that keeps a predetermined amount of martensite to improve a strength of the steel sheet. A content of C being 0.18% or more produces the predetermined amount of martensite, makes it easy to increase the strength of the steel sheet to 1100 MPa or more. Other conditions may make it difficult to obtain a strength of 11000 or more, and thus the content of C is preferably to be 0.22% or more. On the other hand, the content of C is to be 0.40% or less from the viewpoint of restraining embrittlement caused by an excessive increase in the strength of the steel sheet. The content of C is preferably 0.38% or less.

Si: 0.01% or more to 2.50% or less

Si (silicon) is an element acting as a deoxidizer. In addition, Si is an element that improves the strength of the steel sheet through solid-solution strengthening. In order to obtain these effects by making the steel sheet contain Si, a content of Si is to be 0.01% or more. On the other hand, the content of Si is to be 2.50% or less from the viewpoint of restraining decrease in workability due to embrittlement of the steel sheet. Si is a ferrite stabilizing element; a high content of Si may lead to an excess of a ferrite amount. This can raise a problem particularly when a cooling rate in heat treatment is high. Therefore, the content of Si is preferably less than 0.60%, and more preferably 0.58% or less.

Mn: 0.60% or more to 5.00% or less

Mn (manganese) is an element acting as a deoxidizer and is also an element improving hardenability. In order to obtain tempered martensite sufficiently with Mn, a content of Mn is to be 0.60% or more. On the other hand, if the content of Mn becomes excessive, coarse Mn oxide is formed and can serve as a starting point of a fracture in press molding. From the viewpoint of restraining workability of the steel sheet from deteriorating in this manner, the content of Mn is to be 5.00% or less.

P: 0.0200% or less

P (phosphorus) is an impurity element and is an element segregating in a sheet-thickness-center portion of the steel sheet to decrease toughness and embrittling a weld zone. A content of P is preferably as low as possible from the viewpoint of restraining decrease in workability and crash resistance of the steel sheet. Specifically, the content of P is to be 0.0200% or less. The content of P is preferably 0.0100% or less. However, in a case where a content of P of a practical steel sheet is decreased to less than 0.00010%, production costs of the steel sheet significantly increase, which is economically disadvantageous. For that reason, the content of P may be 0.00010% or more.

S: 0.0200% or less

S (sulfur) is an impurity element and is an element spoiling weldability and spoiling productivity in casting and hot rolling. S is also an element forming coarse MnS to spoil hole expandability. From the viewpoint of restraining decrease in weldability, productivity, and crash resistance, a content of S is preferably as low as possible. Specifically, the content of S is to be 0.0200% or less. The content of S is preferably 0.0100% or less. However, in a case where a content of S of a practical steel sheet is decreased to less than 0.000010%, production costs of the steel sheet significantly increase, which is economically disadvantageous. For that reason, the content of S may be 0.000010% or more.

N: 0.0200% or less

N (nitrogen) is an element forming coarse nitride to degrade formability and crash resistance of the steel sheet and to cause a blowhole to develop during welding. For this reason, a content of N is preferably to be 0.0200% or less.

O: 0.0200% or less

O (oxygen) is an element forming coarse oxide to degrade formability and crash resistance of the steel sheet and to cause a blowhole to develop during welding. For this reason, a content of O is preferably 0.0200% or less.

Al: 0% or more to 1.00% or less

Al (aluminum) is an element acting as a deoxidizer and is added when necessary. In order to obtain the effect by making the steel sheet contain Al, a content of Al is preferably 0.02% or more. However, the content of Al is preferably 1.00% or less from the viewpoint of restraining coarse Al oxide from being produced to decrease workability of the steel sheet.

Cr: 0% or more to 2.00% or less

As with Mn, Cr (chromium) is an element being useful in enhancing strength of steel by increasing hardenability. Although a content of Cr may be 0%, in order to obtain the effect by making the steel sheet contain Cr, the content of Cr is preferably 0.10% or more. On the other hand, the content of Cr is preferably 2.00% or less from the viewpoint of restraining coarse Cr carbide from being formed to decrease cold formability.

Mo: 0% or more to 0.50% or less

As with Mn and Cr, Mo (molybdenum) is an element being useful in enhancing strength of steel. Although a content of Mo may be 0%, in order to obtain the effect by making the steel sheet contain Mo, the content of Mo is preferably 0.01% or more. On the other hand, the content of Mo is preferably 0.50% or less from the viewpoint of restraining coarse Mo carbide from being formed to decrease cold workability.

Ti: 0% or more to 0.10% or less

Ti (titanium) is an element being useful in controlling morphology of carbide. For that reason, Ti may be contained in the steel sheet when necessary. In a case where Ti is contained in the steel sheet, a content of Ti is preferably 0.001% or more. However, from the viewpoint of restraining decrease in workability of the steel sheet, the content of Ti is preferably as low as possible, preferably 0.10% or less.

Nb: 0% or more to 0.100% or less

As with Ti, Nb (niobium) is an element being useful in controlling morphology of carbide and is also an element being effective at improving toughness by refining the steel micro-structure. For that reason, Nb may be contained in the steel sheet when necessary. In a case where Nb is contained in the steel sheet, a content of Nb is preferably 0.001% or more. However, the content of Nb is preferably 0.100% or less from the viewpoint of restraining fine, hard Nb carbide from precipitating in a large quantity to increase the strength of the steel sheet and degrade ductility of the steel sheet.

B: 0% or more to 0.0100% or less

B (boron) is an element that restrains ferrite and pearlite from being produced in a cooling process from austenite and accelerates production of a low-temperature transformation structure such as bainite and martensite. In addition, B is an element being beneficial to enhancing strength of steel. For that reason, B may be contained in the steel sheet when necessary. In a case where B is contained in the steel sheet, a content of B is preferably 0.0001% or more. Note that B being less than 0.0001% requires analysis with meticulous attention to detail for its identification and reaches the lower limit of detection for some analyzing apparatus. On the other hand, the content of B is preferably 0.0100% or less from the viewpoint of restraining production of coarse B nitride, which can serve as a starting point of a void occurring in press molding of the steel sheet.

V: 0% or more to 0.50% or less

As with Ti and Nb, V (vanadium) is an element being useful in controlling morphology of carbide and is also an element being effective at improving toughness of the steel sheet by refining the steel micro-structure. For that reason, V may be contained in the steel sheet when necessary. In a case where V is contained in the steel sheet, a content of V is preferably 0.001% or more. On the other hand, the content of V is preferably 0.50% or less from the viewpoint of restraining fine V carbide from precipitating in a large quantity to increase the strength of the steel sheet and degrade ductility of the steel sheet.

Cu: 0% or more to 0.500% or less

Cu (copper) is an element that is useful in improving strength of steel. Although a content of Cu may be 0%, in order to obtain the effect by making the steel sheet contain Cu, the content of Cu is preferably 0.001% or more. On the other hand, the content of Cu is preferably 0.500% or less from the viewpoint of restraining productivity from being decreased due to hot-shortness in hot rolling.

W: 0% or more to 0.100% or less

As with Nb and V, W (tungsten) is an element being useful in controlling morphology of carbide and increasing strength of steel. Although a content of W may be 0%, in order to obtain the effect by making the steel sheet contain W, the content of W is preferably 0.001% or more. On the other hand, the content of W is preferably 0.100% or less from the viewpoint of restraining fine W carbide from precipitating in a large quantity to increase the strength of the steel sheet and degrade ductility of the steel sheet.

Ta: 0% or more to 0.100% or less

As with Nb, V, and W, Ta (tantalum) is an element being useful in controlling morphology of carbide and increasing strength of steel. Although a content of Ta may be 0%, in order to obtain the effect by making the steel sheet contain Ta, the content of Ta is preferably 0.001% or more, and more preferably 0.002% or more. On the other hand, the content of Ta is preferably 0.100% or less, and more preferably 0.080% or less from the viewpoint of restraining fine Ta carbide from precipitating in a large quantity to increase the strength of the steel sheet and degrade ductility of the steel sheet.

Ni: 0% or more to 1.00% or less

Ni (nickel) is an element that is useful in improving strength of steel. Although a content of Ni may be 0%, in order to obtain the effect by making the steel sheet contain Ni, the content of Ni is preferably 0.001% or more. On the other hand, the content of Ni is preferably 1.00% or less from the viewpoint of restraining decrease in ductility of the steel sheet.

Co: 0% or more to 1.00% or less

As with Ni, Co (cobalt) is an element that is useful in improving strength of steel. Although a content of Co may be 0%, in order to obtain the effect by making the steel sheet contain Co, the content of Co is preferably 0.001% or more. On the other hand, the content of Co is preferably 1.00% or less from the viewpoint of restraining decrease in ductility of the steel sheet.

Sn: 0% or more to 0.050% or less

Sn (tin) is an element that can be contained in steel in a case where scrap is used as a raw material of the steel. A content of Sn is preferably as low as possible and may be 0%. From the viewpoint of restraining cold formability from being decreased due to embrittlement of ferrite, the content of Sn is preferably 0.050% or less, and more preferably 0.040% or less. However, the content of Sn may be 0.001% or more from the viewpoint of restraining increase in refining costs.

Sb: 0% or more to 0.050% or less

As with Sn, Sb (antimony) is an element that can be contained in steel in a case where scrap is used as a raw material of the steel. A content of Sb is preferably as low as possible and may be 0%. From the viewpoint of restraining decrease in cold formability of the steel sheet, the content of Sb is preferably 0.050% or less, and more preferably 0.040% or less. However, the content of Sb may be 0.001% or more from the viewpoint of restraining increase in refining costs.

As: 0% or more to 0.050% or less

As with Sn and Sb, As (arsenic) is an element that can be contained in steel in a case where scrap is used as a raw material of the steel. A content of As is preferably as low as possible and may be 0%. From the viewpoint of restraining decrease in cold formability of the steel sheet, the content of As is preferably 0.050% or less, and more preferably 0.040% or less. However, the content of As may be 0.001% or more from the viewpoint of restraining increase in refining costs.

Mg: 0% or more to 0.050% or less

Mg (magnesium) is an element being, in a trace quantity, capable of controlling morphology of sulfide. Although a content of Mg may be 0%, in order to obtain the effect by making the steel sheet contain Mg, the content of Mg is preferably 0.0001% or more, and more preferably 0.0005% or more. On the other hand, from the viewpoint of restraining cold formability from being decreased due to formation of coarse inclusions, the content of Mg is preferably 0.050% or less, and more preferably 0.040% or less.

Ca: 0% or more to 0.050% or less

As with Mg, Ca (calcium) is an element being, in a trace quantity, capable of controlling morphology of sulfide. Although a content of Ca may be 0%, in order to obtain the effect by making the steel sheet contain Ca, the content of Ca is preferably 0.001% or more. On the other hand, from the viewpoint of restraining cold formability of the steel sheet from being decreased by production of coarse Ca oxide, the content of Ca is preferably 0.050% or less, and more preferably 0.040% or less.

Y: 0% or more to 0.050% or less

As with Mg and Ca, Y (yttrium) is an element being, in a trace quantity, capable of controlling morphology of sulfide. Although a content of Y may be 0%, in order to obtain the effect by making the steel sheet contain Y, the content of Y is preferably 0.001% or more. On the other hand, from the viewpoint of restraining cold formability of the steel sheet from being decreased by production of coarse Y oxide, the content of Y is preferably 0.050% or less, and more preferably 0.040% or less.

Zr: 0% or more to 0.050% or less

As with Mg, Ca, and Y, Zr (zirconium) is an element being, in a trace quantity, capable of controlling morphology of sulfide. Although a content of Zr may be 0%, in order to obtain the effect by making the steel sheet contain Zr, the content of Zr is preferably 0.001% or more. On the other hand, from the viewpoint of restraining cold formability of the steel sheet from being decreased by production of coarse Zr oxide, the content of Zr is preferably 0.050% or less, and more preferably 0.040% or less.

La: 0% or more to 0.050% or less

La (lanthanum) is an element being, in a trace quantity, useful in controlling morphology of sulfide. Although a content of La may be 0%, in order to obtain the effect by making the steel sheet contain La, the content of La is preferably 0.001% or more. On the other hand, from the viewpoint of restraining cold formability of the steel sheet from being decreased by production of coarse La oxide, the content of La is preferably 0.050% or less, and more preferably 0.040% or less.

Ce: 0% or more to 0.050% or less

As with La, Ce (cerium) is an element being, in a trace quantity, useful in controlling morphology of sulfide. Although a content of Ce may be 0%, in order to obtain the effect by making the steel sheet contain Ce, the content of Ce is preferably 0.001% or more. On the other hand, from the viewpoint of restraining formability of the steel sheet from being decreased by production of Ce oxide, the content of Ce is preferably 0.050% or less, and more preferably 0.040% or less.

The balance of the chemical composition of the steel sheet according to the present embodiment is Fe (iron) and impurities. Examples of the impurities can include elements that are unavoidably contained from raw materials of steel or scrap or unavoidably contained in a steel-making process and are allowed to be contained within ranges within which the steel sheet according to the present invention can exert the effects according to the present invention.

(Steel Sheet Including Soft Layer)

The steel sheet according to the present invention may be a steel sheet that includes a substrate layer including the steel sheet described above and a soft layer formed on at least one of surfaces of the substrate layer. The soft layer is determined as follows. First, at a 1/2 sheet-thickness point, five Vickers hardnesses are measured under an indentation load of 4.9 N on a line that is perpendicular to a sheet-thickness direction and parallel to a rolling direction. An arithmetic average value of the five Vickers hardnesses measured in this manner is defined as an average Vickers hardness $Hv_0$ at the 1/2 sheet-thickness point. Next, five Vickers hardnesses are measured at each of points that are set every 2% of the sheet thickness from the 1/2 sheet-thickness point toward the surface, on a line that is perpendicular to the sheet-thickness direction and parallel to the rolling direction. An average value of the five Vickers hardnesses measured in this manner at each of sheet-thickness-direction points is determined, and the average value is defined as an average Vickers hardness at each sheet-thickness-direction point. Next, a surface side of a sheet-thickness-direction point at which an average Vickers hardness is 0.9 times or less the average Vickers hardness $Hv_0$ at the 1/2 sheet-thickness point is defined as the soft layer.

When the sheet thickness of the steel sheet is denoted by t, a thickness $t_0$ of the soft layer is preferably more than 10 $\mu$m and 0.15t or less. Making the thickness of the soft layer more than 10 $\mu$m makes it easy to improve bendability of the steel sheet. Making the thickness $t_0$ of the soft layer 0.15t or less restrains excessive decrease in the strength of the steel sheet. The thickness $t_0$ of the soft layer is a thickness of a soft layer per side. The soft layer is to be formed to have a thickness of more than 10 $\mu$m and 0.15t or less on at least one of the surfaces of the substrate layer. For example, as long as a soft layer having a thickness of more than 10 $\mu$m and 0.15t or less is formed on one surface of the substrate layer, a soft layer formed on the other surface may have a thickness $t_0$ of 10 $\mu$m or less. However, it is preferable that soft layers each having a thickness of more than 10 $\mu$m and 0.15t or less be formed on both surfaces. Note that the sheet thickness t of the steel sheet according to the embodiment of the present invention is not limited to a specific thickness; however, the sheet thickness t is preferably 0.8 mm or more to 1.8 mm or less.

(Hardness of Soft Layer)

A standard deviation of Vickers hardnesses that are measured at 150 points under a load of 4.9 N at a 10 $\mu$m point from a surface of the steel sheet on a cross section parallel to the sheet-thickness direction of the steel sheet (a sheet-thickness cross section parallel to the rolling direction R) is preferably 30 or less. In order to reduce starting points of cracks occurring in bending deformation of the steel sheet, uniformity of a steel micro-structure of the soft layer present in an outer layer of the steel sheet is important. An average Vickers hardness $Hv_1$ of the soft layer is 0.9 times or less the average Vickers hardness $Hv_0$ at the t/2 point, preferably 0.8 times or less, and more preferably 0.7 times or less. This is because the relatively softer the soft layer in the outer layer, the more easily the bendability of the steel sheet is improved. The determination of the average Vickers hardness $Hv_0$ at the t/2 point is as described above, and the average Vickers hardness $Hv_1$ of the soft layer is an average value of ten Vickers hardnesses measured at ten randomly selected points under a load of 4.9 N in the soft layer defined as described above.

(Plated Steel Sheet)

The steel sheet according to the present embodiment may include a plating layer on its surface. The plating layer may be any one of, for example, a galvanized layer, a galvannealed layer, and an electrogalvanized layer.

(Production Method)

Next, a production method of the steel sheet according to the present embodiment will be described. The production method described below is an example of a production method of the steel sheet according to the present embodiment, which is not limited to the method described below.

A cast piece having the chemical composition is produced, and from the obtained cast piece, the steel sheet according to the present embodiment can be produced by the following production method.

"Casting Step"

There are no specific constraints on a method for producing the cast piece from molten steel having the chemical composition; for example, the cast piece may be produced by a typical method such as continuous slab caster and a thin slab caster.

"Hot Rolling Step"

There are no specific constraints on hot rolling conditions, either. For example, in a hot rolling step, it is preferable that the cast piece be first heated to 1100°C or more and subjected to holding treatment for 20 minutes or more. This is for driving remelting of coarse inclusions. A heating temperature is more preferably 1200°C or more, and a holding duration is more preferably 25 minutes or more. The heating temperature is preferably 1350°C or less, and the holding duration is preferably 60 minutes or less.

In the hot rolling step, when the cast piece heated as described above is subjected to hot rolling, it is preferable that the cast piece be subjected to finish rolling in a temperature range of 850°C or more to 1000°C or less. In the finish rolling, a more preferable lower limit is 860°C, and a more preferable upper limit is 950°C.

"Coiling Step"

The hot-rolled steel sheet subjected to the finish rolling is coiled into a coil at 550°C or less. Setting a coiling temperature at 550°C or less makes it possible to restrain concentration of alloying elements such as Mn and Si in carbide that is produced in the coiling step. This enables undissolved carbide in the steel sheet to be reduced sufficiently in a multi-step heat treatment to be described later. As a result, it becomes easy to keep the macro hardness and the micro hardness within their respective ranges defined in the present invention, which enables improvement in the crash resistance of the steel sheet. The coiling temperature is preferably 500°C or less. The coiling temperature is preferably 20°C or more because coiling at a temperature about room temperature decreases productivity.

When necessary, the hot-rolled steel sheet may be subjected to reheating treatment for softening.

"Pickling Step"

The coiled hot-rolled steel sheet is uncoiled and subjected to pickling. By pickling, oxide scales on surfaces of the hot-rolled steel sheet can be removed, which allows improvement in chemical treatment properties and plating properties of a cold-rolled steel sheet. The pickling may be performed once or may be performed a plurality of times.

"Cold Rolling Step"

The pickled hot-rolled steel sheet is subjected to cold rolling at a rolling reduction of 30% or more to 90% or less. Setting the rolling reduction at 30% or more makes it easy to keep a shape of the steel sheet flat and to restrain decrease in ductility of the finished product. On the other hand, setting the rolling reduction at 90% or less makes it possible to restrain a cold rolling load from becoming excessive, which makes the cold rolling easy. A lower limit of the rolling reduction is preferably to be 45%, and an upper limit of the rolling reduction is preferably to be 70%. There are no specific constraints on the number of rolling passes and the rolling reduction in each pass.

"Multi-Step Heat Treatment Step"

After the cold rolling step, the steel sheet according to the present invention is subjected to at least two heat treatments to be produced.

(First Heat Treatment)

In first heat treatment, the steel sheet is first subjected to a heating step in which the steel sheet is heated to a temperature of an $Ac_3$ point or more to 1000°C or less and is held for 10 seconds or more. In a case of producing a steel sheet including a soft layer on its surface, dew-point control is performed to form an atmosphere with an oxygen partial pressure of $1.0 \times 10^{-21}$ [atm] ($1.013 \times 10^{-16}$ [Pa]) or more, and the steel sheet is subjected to a heating step in which the steel sheet is heated to a temperature of the $Ac_3$ point or more to 1000°C or less and is held for 20 seconds or more. Thereafter, a cooling step for cooling the steel sheet is performed under the following condition 1) or 2).

1) The steel sheet is cooled to a temperature range of 25°C or more to 300°C or less at an average cooling rate of 20°C/sec or more.
2) The steel sheet is cooled to a cooling stop temperature of 600°C or more to 750°C or less at an average cooling rate of 0.5°C/sec or more to less than 20°C/sec (first-stage cooling) and then cooled to a cooling stop temperature of 25°C or more to 300°C or less at an average cooling rate of 20°C/sec or more. An excessively high average cooling rate may tend to cause a poor shape such as bends to occur in the steel sheet, degrading bendability; therefore, the average cooling rates are preferably set at 200°C/sec or less.

Note that the $Ac_3$ point is determined by the following Formula (a). In Formula (a), each symbol of an element indicates a content of the element (mass%). A symbol of an element that is not contained in steel is to be substituted by zero.

$Ac_3$ point (°C) = 901 - 203 × $\sqrt{C}$ - 15.2 × Ni + 44.7 × Si +104 × V + 31.5 × Mo + 13.1 × W　　　　　　Formula (a)

By the first heat treatment step, the steel micro-structure of the steel sheet is formed into a steel micro-structure that mainly includes as-quenched martensite or tempered martensite. Martensite is a steel micro-structure that contains grain boundaries and dislocations in a large quantity. In grain boundary diffusion in which grain boundaries serve as diffusion paths and in dislocation diffusion in which dislocations serve as diffusion paths, elements diffuse faster than in intraparticle diffusion in which elements diffuse inside grains. Since dissolving of carbide is a phenomenon attributable to diffusion of elements, the more grain boundaries are present, the more easily carbide is dissolved. By accelerating dissolving of carbide, carbide is restrained from segregating.

Setting the heating temperature at the $Ac_3$ point or more makes it easy to obtain a sufficient amount of austenite during heating and makes it easy to obtain a sufficient amount of tempered martensite after cooling. If the heating temperature is more than 1000°C, austenite becomes coarse, and variations in hardness are increased, resulting in a failure to obtain desired properties. Setting the holding duration at 10 seconds or more during heating makes it easy to obtain a sufficient amount of austenite and makes it easy to obtain a sufficient amount of tempered martensite after cooling.

When the heat treatment is performed in the atmosphere with an oxygen partial pressure of $1.0 \times 10^{-21}$ [atm] or more, decarburization progresses in an outer layer of the steel sheet, as a result of which a soft layer is formed in the outer layer of the steel sheet. In order to obtain a steel sheet including a desired soft layer, it is necessary to control an oxygen partial pressure: $P_{O2}$ of furnace atmosphere within an appropriate range; the oxygen partial pressure is preferably set at $1.0 \times 10^{-21}$ [atm] or more.

In the cooling step described in 1), setting the average cooling rate at 20°C/sec or more causes sufficient quenching, which makes it easy to obtain martensite. This enables dissolving of carbide to sufficiently progress in second heat treatment to be described later. Setting the cooling stop temperature at 25°C or more makes it possible to restrain decrease in productivity. Setting the cooling stop temperature at 300°C or less makes it easy to obtain a sufficient amount of martensite. This enables dissolving of carbide to sufficiently progress in the second heat treatment to be described later.

The cooling step described in 2) is performed, for example, in a case where the steel sheet is rapidly cooled through a slow-cooling zone. In the first-stage cooling, setting the average cooling rate at less than 20°C/sec makes it possible to produce ferrite and pearlite. However, with the chemical composition, ferrite transformation and pearlite transformation are unlikely to occur, which can make it easy to restrain excessive production of ferrite and pearlite. Setting the cooling rate in the first-stage cooling at 20°C/sec or more only leads to the same result as in the case where the cooling step described in 1) is performed, and a material quality of the steel sheet does not necessarily deteriorate. At the same time, setting the average cooling rate in the first-stage cooling at 0.5°C/sec or more restrains excessive progress of the ferrite transformation and the pearlite transformation, which makes it easy to obtain a predetermined amount of martensite.

(Second Heat Treatment)

In the second heat treatment, the steel sheet is first subjected to a heating step in which the steel sheet is reheated to a temperature of the $Ac_3$ point or more and is held for 10 seconds or more. In a case of producing a steel sheet including a soft layer on its surface, dew-point control is performed to form an atmosphere with an oxygen partial pressure of $1.0 \times 10^{-21}$ [atm] $(1.013 \times 10^{-16}$ [Pa]) or more, and the steel sheet is subjected to a heating step in which the steel sheet is reheated to the temperature of the $Ac_3$ point or more and is held for 10 seconds or more. Thereafter, a cooling step for cooling the steel sheet is performed under the following condition 1) or 2).

1) The steel sheet is cooled to a temperature range of 25°C or more to 300°C or less at an average cooling rate of 20°C/sec or more.
2) The steel sheet is cooled to a cooling stop temperature of 600°C or more to 750°C or less at an average cooling rate of 0.5°C/sec or more to less than 20°C/sec (first-stage cooling) and then cooled to a cooling stop temperature of 25°C or more to 300°C or less at an average cooling rate of 20°C/sec or more.

By the first heat treatment step, a steel micro-structure that mainly includes as-quenched martensite or tempered martensite is formed, where elements easily diffuse. By further performing the second heat treatment step, the steel micro-structure can be formulated, and a sufficient amount of coarse carbide in the substrate layer of the steel sheet can be dissolved. This makes it possible to sufficiently reduce segregation of carbide. As a result, it is possible to increase uniformities in the macro hardness and the micro hardness of the substrate layer.

Setting the heating temperature at the $Ac_3$ point or more makes it easy to obtain a sufficient amount of austenite during heating and makes it easy to obtain a sufficient amount of tempered martensite after cooling. Setting the holding duration at 10 seconds or more during heating makes it easy to obtain a sufficient amount of austenite and makes it easy to obtain a sufficient amount of tempered martensite after cooling. Setting the holding duration at 10 seconds or more during heating makes it possible to dissolve carbide sufficiently.

In a case of producing a steel sheet including a soft layer on its surface, the heat treatment is performed in an atmosphere with an oxygen partial pressure of $1.0 \times 10^{-21}$ [atm] or more as described above. By the heat treatment in this manner, decarburization progresses in the outer layer of the steel sheet, as a result of which a soft layer is formed in the outer layer of the steel sheet. In order to obtain a steel sheet including a desired soft layer, it is necessary to control an oxygen partial pressure: $P_{O_2}$ of furnace atmosphere within an appropriate range; the oxygen partial pressure is preferably set at $1.0 \times 10^{-21}$ [atm] or more.

In the cooling step described in 1), setting the average cooling rate at 20°C/sec or more causes sufficient quenching, which makes it easy to obtain desired tempered martensite. For that reason, a tensile strength of the steel sheet can be increased to 1100 MPa or more. Setting the cooling stop temperature at 25°C or more makes it possible to restrain decrease in productivity. Setting the cooling stop temperature at 300°C or less makes it easy to obtain desired tempered martensite. For that reason, a tensile strength of the steel sheet can be increased to 1100 MPa or more.

The cooling step described in 2) is performed, for example, in a case where the steel sheet is rapidly cooled through a slow-cooling zone. In the first-stage cooling, setting the average cooling rate at less than 20°C/sec makes it possible to produce ferrite and pearlite. However, with the chemical composition, ferrite transformation and pearlite transformation are unlikely to occur, which can make it easy to restrain excessive production of ferrite and pearlite. Setting the cooling rate in the first-stage cooling at 20°C/sec or more only leads to the same result as in the case where the cooling step described in 1) is performed, and a material quality of the steel sheet does not necessarily deteriorate. At the same time, setting the average cooling rate in the first-stage cooling at 0.5°C/sec or more restrains excessive progress of the ferrite transformation and the pearlite transformation, which makes it easy to obtain a desired amount of martensite.

Although effects of the multi-step heat treatment step are sufficiently exerted by performing the two heat treatments, three or more heat treatment steps may be performed in total by performing the second heat treatment step a plurality of times after the first heat treatment step. In a case of producing a steel sheet including a soft layer, the oxygen partial pressure is to be set at $1.0 \times 10^{-21}$ [atm] or more in at least one of the first heat treatment and the second heat treatment.

"Holding Step"

After the cooling in the last heat treatment step in the multi-step heat treatment step, the steel sheet is held in a temperature range of 450°C or less to 150°C or more for 10 seconds or more to 500 seconds or less. In this holding step, the steel sheet may be held at a constant temperature or may be heated and cooled in the middle of the step as appropriate. Through this holding step, the as-quenched martensite obtained by the cooling can be tempered. Setting the holding temperature at 450°C or less to 150°C or more makes it possible to restrain the tempering from progressing excessively to increase the tensile strength of the steel sheet to 1100 MPa or more. Setting the holding duration at 10 seconds or more makes it possible to cause the tempering to progress sufficiently. In addition, setting a tempering duration at 500 seconds or less makes it possible to restrain the tempering from progressing excessively to increase the tensile strength of the steel sheet to 1100 MPa or more.

"Tempering Step"

After the holding step, the steel sheet may be tempered. This tempering step may be a step in which the steel sheet is held or reheated at a predetermined temperature in the middle of cooling to room temperature after the holding step or may be a step in which the steel sheet is reheated to the predetermined temperature after the cooling to room temperature has been finished. A method for heating the steel sheet in the tempering step is not limited to a specific method. However, from the viewpoint of restraining decrease in the strength of the steel sheet, the holding temperature or the heating temperature in the tempering step is preferably 500°C or less. Before the holding step, austenite may not be transformed into martensite but remain as it is; if such austenite is quenched during or after the holding step, an excess of as-quenched martensite may be produced in the steel sheet. By performing the tempering step after the holding step, such as-quenched martensite can be tempered.

"Plating Step"

The steel sheet may be subjected to plating treatment such as electrolytic plating treatment and deposition plating treatment and may be further subjected to galvannealing treatment after the plating treatment. The steel sheet may be subjected to surface treatment such as formation of an organic coating film, film laminating, treatment with organic salt or inorganic salt, and non-chromium treatment.

In a case where galvanizing treatment is performed on the steel sheet as the plating treatment, the steel sheet is heated or cooled to a temperature of (temperature of galvanizing bath - 40°C) to (temperature of galvanizing bath + 50°C) and immersed in a galvanizing bath. Through the galvanizing treatment, a steel sheet with a galvanized layer on its surface, that is, a galvanized steel sheet is obtained. As the galvanized layer, for example, one having a chemical composition containing Fe: 7 mass% or more to 15 mass% or less, with the balance expressed as: Zn, Al, and impurities can be used. Alternatively, the galvanized layer may be made of a zinc alloy.

In a case where the galvannealing treatment is performed after the galvanizing treatment, the galvanized steel sheet is heated to a temperature of 460°C or more to 600°C or less, for example. Setting this heating temperature at 460°C or more allows the steel sheet to be galvannealed sufficiently. Setting this heating temperature at 600°C or less makes it possible to restrain the steel sheet from being galvannealed excessively and deteriorating in corrosion resistance. Through such galvannealing treatment, a steel sheet with a galvannealed layer on its surface, that is, a galvannealed steel sheet is obtained.

EXAMPLE 1

Next, Example of the present invention will be described; however, conditions described in Example are merely an example of conditions that was adopted for confirming feasibility and effects of the present invention, and the present invention is not limited to this example of conditions. In the present invention, various conditions can be adopted as long as the conditions allow the objective of the present invention to be achieved without departing from the gist of the present invention.

Cast pieces having chemical compositions shown in Tables 1 to 3 and Tables 11 to 13 were subjected to hot rolling under conditions shown in Tables 4 to 6 and Tables 14 to 16 and then coiled. The resulting hot-rolled steel sheets were subjected to cold rolling under conditions shown in Tables 4 to 6 and Tables 14 to 16. Subsequently, the resulting cold-rolled steel sheets were subjected to heat treatment under conditions shown in Tables 4 to 6 and Tables 14 to 16. Some of the steel sheets were plated by a conventional method, and some of the plated steel sheets were subjected to galvannealing treatment by a conventional method. The steel sheets obtained in this manner were subjected to identification of their steel micro-structures, measurement of their hardnesses and tensile strengths, and a bending test and a hole expansion test for evaluating their crash resistances, by the following methods. The results are shown in Tables 7 to 10 and Tables 17 to 20.

(Identification of Steel Micro-Structures)

In the present invention, identification of steel micro-structures and calculation of their volume fractions are performed as follows.

"Ferrite"

First, a sample including a sheet-thickness cross section that is parallel to a rolling direction of a steel sheet is taken, and the cross section is determined as an observation surface. Of the observation surface, a 100 $\mu$m $\times$ 100 $\mu$m region centered about a 1/4 sheet-thickness point from a surface of the steel sheet is determined as an observation region. An electron channeling contrast image, which is seen by observing this observation region under a scanning electron microscope at 1000 to 50000x magnification, is an image illustrating a difference in crystal orientation between grains in a form of a difference in contrast. In this electron channeling contrast image, an area of a uniform contrast illustrates ferrite. An area fraction of ferrite identified in this manner is then calculated by a point counting procedure (conforming to ASTM E562). The area fraction of ferrite calculated in this manner is regarded as a volume fraction of ferrite.

"Pearlite"

First, the observation surface is etched with Nital reagent. Of the etched observation surface, a 100 $\mu$m $\times$ 100 $\mu$m region centered about a 1/4 sheet-thickness point from a surface of the steel sheet is determined as an observation region. This observation region is observed under an optical microscope at 1000 to 50000x magnification, and in an observed image, an area of a dark contrast is regarded as pearlite. An area fraction of pearlite identified in this manner is then calculated by the point counting procedure. The area fraction of pearlite calculated in this manner is regarded as a volume fraction of pearlite.

"Bainite and Tempered Martensite"

An observation region obtained by the etching with Nital reagent is observed under a field emission scanning electron microscope (FE-SEM) at 1000 to 50000x magnification. In this observation region, bainite and tempered Martensite are identified from positions and arrangement of cementite grains included inside a steel micro-structure, as follows.

Bainite is present in a state where cementite or retained austenite grains are present in lath bainitic ferrite boundaries and in a state where cementite is present inside lath bainitic ferrite. In a case where cementite or retained austenite grains are present in the lath bainitic ferrite boundaries, the bainitic ferrite boundaries are found, so that bainite can be identified. In a case where cementite is present inside the lath bainitic ferrite, the number of relations in crystal orientation between bainitic ferrite and cementite is one, and cementite grains have the same variant, so that bainite can be identified. An area fraction of bainite identified in this manner is calculated by the point counting procedure. The area fraction of bainite is regarded as a volume fraction of bainite.

In tempered martensite, cementite grains are present inside martensite laths; the number of relations in crystal orientation between martensite laths and cementite is two or more, and cementite has a plurality of variants, so that tempered martensite can be identified. An area fraction of tempered martensite identified in this manner is calculated by the point counting procedure. The area fraction of tempered martensite is regarded as a volume fraction of tempered martensite.

"As-quenched Martensite"

First, an observation surface similar to the observation surface used for the identification of ferrite is etched with LePera reagent, and a region similar to that used for the identification of ferrite is determined as an observation region. In the etching with the LePera reagent, martensite and retained austenite are not etched. For that reason, the observation region etched with the LePera reagent is observed under the FE-SEM, and areas that are not etched are regarded as martensite and retained austenite. Then, a total area fraction of martensite and retained austenite identified in this manner is calculated by the point counting procedure, and the area fraction is regarded as a total volume fraction of martensite and retained austenite.

Next, from the total volume fraction, a volume fraction of retained austenite that is calculated as follows is subtracted, so that a volume fraction of as-quenched martensite can be calculated.

"Retained Austenite"

In the present invention, an area fraction of retained austenite is determined by X-ray measurement as follows. First, a portion of the steel sheet from its surface to 1/4 of its sheet thickness is removed by mechanical polishing and chemical polishing. Next, a surface subjected to the chemical polishing is subjected to measurement using MoK$\alpha$ X-ray as a characteristic X-ray. Then, based on an integrated intensity ratio between diffraction peaks of (200) and (211) of a body-centered cubic lattice (bcc) phase and diffraction peaks of (200), (220), and (311) of a face-centered cubic lattice (fcc) phase, an area fraction Sy of retained austenite is calculated by the following formula. The area fraction Sy of retained austenite calculated in this manner is regarded as a volume fraction of retained austenite.

$$S\gamma = (I200f + I220f + I311f) / (I200b + I211b) \times 100$$

Here, I200f, I220f, and I311f represent intensities of diffraction peaks of (200), (220), and (311) of an fcc phase, respectively, and I200b and I211b represent intensities of diffraction peaks of (200) and (211) of a bcc phase, respectively.

(Thickness of Soft Layer)

A method for measuring the thickness $t_0$ of a soft layer, that is, a definition of a soft layer is as described above.

(Measurement of Hardness)

A method for measuring the macro hardness of the steel sheet is as described above. That is, in a 300-$\mu$m-square region that is set in a cross section parallel to a sheet-thickness direction of the steel sheet and is centered about a t/2 point from a surface of the steel sheet, Vickers hardnesses are measured under a load of 9.8 N at 30 randomly-selected points, and a standard deviation of these Vickers hardnesses (macro-hardness standard deviation) is determined. In addition, a method for measuring the micro hardness of the steel sheet is as described above. That is, in a 100-$\mu$m-square region that is set in a cross section parallel to the sheet-thickness direction of the steel sheet and is centered about a t/2 point from the surface of the steel sheet, the region is divided into 10×10, 100 subregions of equal size. At a center of each subregion, a nano hardness is measured under a maximum load of 1 mN. Then, out of the subregions, the number of subregions each of which makes a difference in nano hardness of 3 GPa or more from any one of its eight surrounding subregions (micro-hardness variation) was determined.

A method for measuring a hardness of the soft layer is as described above. That is, at a 10 $\mu$m point from a surface of the steel sheet on a cross section parallel to the sheet-thickness direction of the steel sheet, Vickers hardnesses are measured at 150 points under a load of 4.9 N, and a standard deviation of the Vickers hardnesses was determined. A method for measuring an average Vickers hardness $Hv_1$ of the soft layer is as described above.

In the present example, soft layers are formed on both surfaces of the steel sheet; however, thicknesses of the soft layers formed on respective surfaces under the production conditions make no significant difference, and thus the tables show thicknesses of soft layers each formed on one surface.

(Measurement of Tensile Strength TS and Elongation El)

Measurement was performed in conformance with JIS Z 2241(2011) and using No. 5 test coupons that were taken from the steel sheet in a direction perpendicular to a rolling direction of the steel sheet, and tensile strengths TS (MPa) and elongations El (%) were determined.

(Bending Test)

Bendability was evaluated in accordance with the VDA standard (VDA238-100) defined by German Association of the Automotive Industry under the following measurement conditions. In the present invention, a maximum bending angle $\alpha$ was determined by converting a displacement at a maximum load obtained by the bending test into an angle in accordance with the VDA standard. A test specimen resulting in a maximum bending angle $\alpha$ (deg) of $2.37t^2 - 14t + 65$ or more was rated as good. For a steel sheet including a soft layer, a test specimen resulting in a maximum bending angle $\alpha$ (deg) of $2.37t^2 - 14t + 80$ or more was rated as good. Here, t denotes a sheet thickness (mm).

Test specimen dimensions: 60 mm (rolling direction) $\times$ 60 mm (direction perpendicular to rolling direction)
Bending ridge line: A punch was pressed such that a bending ridge line extends in a direction perpendicular to the rolling direction.
Test method: Roll supported, punch press
Distance between rolls: $\phi$30 mm
Punch shape: Tip R = 0.4 mm
Support spacing: 2.0 $\times$ Sheet thickness (mm) + 0.5 mm
Pressing speed: 20 mm/min
Test machine: SIMADZU AUTOGRAPH 20kN

(Measurement of Limiting Hole Expansion Ratio)

In measurement of a limiting hole expansion ratio ($\lambda$), first, a piece of sheet measuring 90 mm $\pm$ 10 mm each side was cut out, and a hole having a diameter of 10 mm was punched at a center of the piece of sheet, by which a test specimen for hole expansion is prepared. A clearance of the punching was set at 12.5%. The test specimen was placed at a position at which a distance between a tip of a cone-shaped jig for the hole expansion and a center portion of the punched hole is within $\pm$ 1 mm, and a hole expansion value was measured in conformity with JIS Z 2256 (2010).

(Evaluation of Crash Resistance)

For evaluation of crash resistance, in the bending test, a test specimen resulting in a maximum bending angle $\alpha$ (deg) of $2.37t^2 - 14t + 65$ or more (for a steel sheet including a soft layer, a maximum bending angle $\alpha$ (deg) of $2.37t^2 - 14t + 80$ or more), TS $\times$ El of 13000 or more, and TS $\times$ $\lambda$ of 33000 or more was rated as "O", and a test specimen failed to satisfy any one of them was rated as "$\times$".

[Table 1]

TABLE 1

Chemical composition(mass% the balance: Fe and impurities)

| No. | C | Si | Mn | P | S | N | O | Al | B | Ti | Nb | V | Mo | Cr | Co | Ni | Cu | W | Ta | Sn | Sb | As | Mg | Ca | Y | Zr | La | Ce | Ac3 |
|---|---|---|---|---|---|---|---|---|---|---|---|---|---|---|---|---|---|---|---|---|---|---|---|---|---|---|---|---|---|
| 1 | 0.31 | 0.37 | 4.40 | 0.0150 | 0.0155 | 0.0118 | 0.0015 | 0.17 | - | 0.01 | 0.003 | - | - | 0.20 | - | - | - | - | - | - | - | - | - | - | - | - | - | - | 804 |
| 2 | 0.25 | 1.79 | 4.70 | 0.0014 | 0.0100 | 0.0035 | 0.0001 | 0.44 | 0.0018 | - | - | - | - | - | - | - | - | - | - | - | - | - | - | - | - | - | - | - | 879 |
| 3 | 0.35 | 1.14 | 4.40 | 0.0028 | 0.0120 | 0.0003 | 0.0030 | 0.22 | 0.0058 | - | - | - | 0.15 | - | - | - | - | - | - | - | 0.015 | - | - | - | - | - | - | - | 837 |
| 4 | 0.24 | 1.47 | 3.60 | 0.0043 | 0.0018 | 0.0119 | 0.0153 | 0.10 | 0.0020 | 0.09 | - | 0.08 | - | - | - | - | - | - | - | - | - | - | - | - | - | - | - | - | 876 |
| 5 | 0.22 | 0.82 | 3.40 | 0.0046 | 0.0132 | 0.0150 | 0.0034 | 0.05 | - | - | - | - | 0.05 | - | - | - | - | - | - | - | - | - | - | - | - | - | - | - | 843 |
| 6 | 0.25 | 0.64 | 2.80 | 0.0017 | 0.0064 | 0.0187 | 0.0015 | 0.01 | 0.0020 | 0.02 | 0.021 | - | 0.10 | - | - | - | - | - | - | - | - | - | - | - | - | - | - | - | 831 |
| 7 | 0.37 | 1.49 | 2.10 | 0.0126 | 0.0168 | 0.0151 | 0.0045 | - | 0.0010 | - | - | - | - | - | - | 0.32 | 0.091 | - | - | - | - | - | - | - | - | - | - | - | 839 |
| 8 | 0.20 | 1.15 | 1.30 | 0.0038 | 0.0016 | 0.0138 | 0.0015 | 0.11 | 0.0042 | - | - | - | - | - | - | - | - | - | - | - | - | - | - | - | - | - | - | - | 861 |
| 9 | 0.20 | 0.22 | 4.50 | 0.0047 | 0.0009 | 0.0182 | 0.0031 | 0.18 | 0.0006 | - | - | - | - | - | - | - | - | - | 0.010 | - | - | 0.021 | - | - | - | - | - | - | 821 |
| 10 | 0.19 | 0.71 | 0.80 | 0.0026 | 0.0016 | 0.0107 | 0.0037 | 0.21 | 0.0008 | 0.10 | 0.020 | - | 0.15 | - | - | - | - | - | - | - | - | - | - | - | - | - | - | - | 844 |
| 11 | 0.28 | 1.90 | 3.10 | 0.0027 | 0.0047 | 0.0180 | 0.0005 | 0.06 | 0.0014 | - | - | - | - | - | - | - | - | - | - | 0.012 | - | - | - | - | - | - | - | - | 884 |
| 12 | 0.36 | 1.31 | 4.00 | 0.0113 | 0.0015 | 0.0156 | 0.0040 | 0.20 | - | - | - | - | - | - | - | - | - | - | - | - | - | - | - | - | - | - | - | - | 838 |
| 13 | 0.38 | 0.88 | 2.20 | 0.0005 | 0.0033 | 0.0071 | 0.0156 | 0.15 | 0.0082 | - | - | - | - | 1.58 | - | - | - | - | - | - | - | - | 0.004 | - | - | - | - | - | 816 |
| 14 | 0.36 | 1.23 | 2.30 | 0.0186 | 0.0009 | 0.0049 | 0.0004 | 0.23 | 0.0006 | - | - | - | - | - | - | - | - | - | - | - | - | - | - | - | - | - | - | - | 835 |
| 15 | 0.33 | 0.88 | 3.90 | 0.0038 | 0.0030 | 0.0108 | 0.0149 | 0.06 | - | - | - | - | - | - | - | - | - | 0.008 | - | - | - | - | - | 0.005 | - | - | - | - | 824 |
| 16 | 0.29 | 0.17 | 1.60 | 0.0020 | 0.0029 | 0.0016 | 0.0001 | 0.58 | 0.0018 | - | - | - | - | - | - | 0.72 | - | - | - | - | - | - | - | - | 0.007 | - | - | - | 788 |
| 17 | 0.35 | 1.58 | 1.30 | 0.0001 | 0.0092 | 0.0040 | 0.0033 | 0.02 | 0.0018 | - | - | - | - | - | - | - | - | - | - | - | - | - | - | - | - | 0.016 | - | - | 851 |
| 18 | 0.29 | 0.05 | 2.20 | 0.0007 | 0.0010 | 0.0035 | 0.0103 | 0.15 | 0.0079 | - | - | - | - | - | - | - | 0.2 | - | - | - | - | - | - | - | - | - | 0.002 | - | 793 |
| 19 | 0.31 | 1.55 | 2.00 | 0.0027 | 0.0037 | 0.0068 | 0.0025 | - | 0.0016 | - | - | - | - | - | 0.20 | - | - | - | - | - | - | - | - | - | - | - | - | 0.010 | 857 |
| 20 | 0.26 | 0.68 | 1.10 | 0.0002 | 0.0037 | 0.0067 | 0.0051 | 0.16 | 0.0007 | - | - | - | 0.13 | 0.50 | - | - | - | - | - | - | - | - | - | - | - | - | - | - | 833 |

[Table 2]

TABLE 2

| No. | Chemical composition(mass% the balance: Fe and impurities) | | | | | | | | | | | | | | | | | | | | | | | | | | | | | Ac3 |
|---|---|---|---|---|---|---|---|---|---|---|---|---|---|---|---|---|---|---|---|---|---|---|---|---|---|---|---|---|---|---|
| | C | Si | Mn | P | S | N | O | Al | B | Ti | Nb | V | Mo | Cr | Co | Ni | Cu | W | Ta | Sn | Sb | As | Mg | Ca | Y | Zr | La | Ce | |
| 21 | 0.18 | 0.27 | 1.30 | 0.0030 | 0.0068 | 0.0006 | 0.0012 | 0.58 | 0.0016 | 0.01 | - | - | - | - | - | - | - | - | - | - | - | - | - | - | - | - | - | - | - | 826 |
| 22 | 0.18 | 1.91 | 1.50 | 0.0027 | 0.0016 | 0.0023 | 0.0014 | 0.10 | 0.0008 | - | 0.013 | - | - | - | - | - | - | - | - | - | - | - | - | - | - | - | - | - | - | 899 |
| 23 | 0.21 | 0.38 | 0.80 | 0.0036 | 0.0164 | 0.0007 | 0.0156 | 0.67 | 0.0012 | - | - | - | - | 0.23 | - | - | - | - | - | - | - | - | - | - | - | - | - | - | - | 824 |
| 24 | 0.18 | 0.44 | 0.60 | 0.0016 | 0.0115 | 0.0015 | 0.0015 | 0.03 | 0.0016 | 0.05 | - | - | - | - | - | 0.32 | - | - | - | - | - | - | - | - | - | - | - | - | - | 829 |
| 25 | 0.19 | 0.20 | 1.70 | 0.0014 | 0.0171 | 0.0055 | 0.0022 | 0.08 | 0.0010 | - | 0.038 | 0.22 | - | - | - | - | - | - | - | - | - | - | - | - | - | - | - | - | - | 844 |
| 26 | 0.34 | 0.10 | 0.90 | 0.0006 | 0.0015 | 0.0113 | 0.0137 | 0.23 | 0.0019 | - | - | - | - | - | 0.12 | - | - | - | - | - | - | - | - | - | - | - | - | - | - | 787 |
| 27 | 0.20 | 1.44 | 1.10 | 0.0027 | 0.0180 | 0.0034 | 0.0035 | 0.06 | 0.0019 | - | 0.018 | - | - | - | - | - | - | - | - | - | - | - | - | - | - | - | - | - | - | 874 |
| 28 | 0.21 | 0.34 | 2.30 | 0.0079 | 0.0029 | 0.0011 | 0.0030 | 0.17 | 0.0008 | 0.01 | - | - | 0.15 | - | - | - | - | - | - | - | - | - | - | - | - | - | - | - | - | 827 |
| 29 | 0.19 | 0.33 | 4.10 | 0.0013 | 0.0044 | 0.0045 | 0.0028 | 0.15 | - | - | 0.043 | - | - | - | - | - | - | 0.020 | - | - | - | - | - | - | - | - | - | - | - | 831 |
| 30 | 0.20 | 0.82 | 1.60 | 0.0040 | 0.0012 | 0.0035 | 0.0015 | 0.74 | 0.0068 | - | 0.015 | 0.05 | - | - | - | - | - | - | - | - | 0.020 | - | - | - | - | - | - | - | - | 852 |
| 31 | 0.37 | 0.47 | 1.40 | 0.0052 | 0.0004 | 0.0033 | 0.0181 | 0.08 | 0.0030 | 0.01 | - | - | - | - | - | - | - | - | - | - | - | - | - | - | - | - | - | - | - | 799 |
| 32 | 0.36 | 0.53 | 0.60 | 0.0024 | 0.0103 | 0.0033 | 0.0035 | - | 0.0016 | - | - | 0.41 | - | - | - | - | - | - | - | - | - | - | - | - | - | - | - | - | - | 846 |
| 33 | 0.18 | 0.20 | 4.00 | 0.0031 | 0.0130 | 0.0027 | 0.0121 | - | 0.0011 | - | - | 0.14 | - | - | - | - | - | - | - | - | - | - | - | - | - | - | - | - | - | 838 |
| 34 | 0.15 | 1.45 | 3.70 | 0.0011 | 0.0024 | 0.0014 | 0.0011 | 0.14 | 0.0079 | - | - | - | - | - | - | - | - | - | - | - | - | - | - | - | - | - | - | - | - | 887 |
| 35 | 0.41 | 0.82 | 4.50 | 0.0021 | 0.0007 | 0.0072 | 0.0028 | 0.10 | 0.0002 | - | - | - | - | - | - | - | - | - | - | - | - | - | - | - | - | - | - | - | - | 808 |
| 36 | 0.38 | 2.60 | 2.60 | 0.0155 | 0.0003 | 0.0173 | 0.0013 | 0.12 | 0.0011 | - | - | - | - | - | - | - | - | - | - | - | 0.011 | - | - | - | - | - | - | - | - | 892 |
| 37 | 0.26 | 0.03 | 0.25 | 0.0024 | 0.0162 | 0.0012 | 0.0047 | 0.72 | 0.0014 | - | - | - | - | - | - | - | - | - | - | - | - | - | - | - | - | - | - | - | - | 799 |
| 38 | 0.21 | 0.54 | 5.10 | 0.0013 | 0.0176 | 0.0049 | 0.0025 | 0.67 | 0.0079 | - | - | - | - | - | - | - | - | - | - | - | - | - | - | - | - | - | - | - | - | 833 |
| 39 | 0.37 | 1.72 | 4.00 | 0.0205 | 0.0014 | 0.0127 | 0.0150 | 0.16 | 0.0020 | - | - | - | - | 0.34 | - | - | - | - | - | - | - | - | - | - | - | - | - | - | - | 854 |
| 40 | 0.32 | 0.69 | 2.10 | 0.0009 | 0.0208 | 0.0131 | 0.0028 | 0.02 | 0.0006 | - | - | - | - | - | - | - | - | - | - | - | - | - | - | - | - | - | - | - | - | 817 |

Underline shows that it does not meet the claimed range.

18

[Table 3]

TABLE 3

| No. | Chemical composition(mass% the balance: Fe and impurities) | | | | | | | | | | | | | | | | | | | | | | | | | | | | | Ac3 |
|---|---|---|---|---|---|---|---|---|---|---|---|---|---|---|---|---|---|---|---|---|---|---|---|---|---|---|---|---|---|
| | C | Si | Mn | P | S | N | O | Al | B | Ti | Nb | V | Mo | Cr | Co | Ni | Cu | W | Ta | Sn | Sb | As | Mg | Ca | Y | Zr | La | Ce | |
| 41 | 0.33 | 1.10 | 2.40 | 0.0029 | 0.0119 | 0.0206 | 0.0036 | 0.49 | 0.0020 | | | | | | | | | | | | | | | | | | | | 834 |
| 42 | 0.34 | 1.11 | 3.80 | 0.0011 | 0.0034 | 0.0062 | 0.0031 | 1.03 | 0.0001 | | | | | | | | | | | | | | | | | | | | 832 |
| 43 | 0.30 | 0.01 | 3.60 | 0.0022 | 0.0033 | 0.0055 | 0.0024 | 0.13 | 0.0103 | | | | | | | | | | | | | | | | | | | | 791 |
| 44 | 0.25 | 0.36 | 3.80 | 0.0001 | 0.0062 | 0.0101 | 0.0022 | 0.05 | 0.0013 | 0.10 | | | | | | | | | | | | | | | | | | | 817 |
| 45 | 0.36 | 0.50 | 3.00 | 0.0012 | 0.0001 | 0.0141 | 0.0020 | 0.05 | 0.0015 | | 0.103 | | | | | | | | | | | | | | | | | | 802 |
| 46 | 0.28 | 0.21 | 2.80 | 0.0036 | 0.0018 | 0.0133 | 0.0045 | 0.74 | 0.0091 | | | 0.52 | | | | | | | | | | | | | | | | | 857 |
| 47 | 0.25 | 0.44 | 1.30 | 0.0032 | 0.0044 | 0.0050 | 0.0204 | 0.15 | 0.0048 | | | | | | | | | | | | | | | | | | | | 819 |
| 48 | 0.30 | 1.19 | 1.80 | 0.0001 | 0.0015 | 0.0183 | 0.0039 | 0.18 | 0.0002 | | | | 0.52 | | | | | | | | | | | | | | | | 860 |
| 49 | 0.34 | 0.65 | 2.20 | 0.0122 | 0.0012 | 0.0094 | 0.0171 | 0.03 | 0.0066 | | | | | 2.04 | | | | | | | | | | | | | | | 812 |
| 50 | 0.29 | 1.50 | 1.70 | 0.0008 | 0.0055 | 0.0090 | 0.0037 | 0.04 | 0.0018 | | | | | | 1.20 | | | | | | | | | | | | | | 859 |
| 51 | 0.38 | 1.59 | 1.60 | 0.0001 | 0.0032 | 0.0189 | 0.0021 | 0.11 | 0.0019 | | | | | | | 1.04 | | | | | | | | | | | | | 831 |
| 52 | 0.38 | 0.54 | 4.70 | 0.0056 | 0.0179 | 0.0028 | 0.0124 | 0.10 | 0.0006 | | | | | | | | 0.52 | | | | 0.032 | | | | | | | | 800 |
| 53 | 0.28 | 1.87 | 4.10 | 0.0144 | 0.0008 | 0.0022 | 0.0035 | 0.16 | 0.0024 | | | | | | | | | 0.102 | | | | | | | | | | | 879 |
| 54 | 0.23 | 1.56 | 2.90 | 0.0042 | 0.0033 | 0.0136 | 0.0011 | | 0.0006 | | | | | | | | | | 0.102 | | | | | | | | | | 873 |
| 55 | 0.21 | 1.37 | 2.70 | 0.0039 | 0.0046 | 0.0147 | 0.0017 | 0.12 | 0.0018 | | | | | | | | | | | 0.052 | | | | | | | | | 869 |
| 56 | 0.24 | 0.78 | 1.40 | 0.0010 | 0.0004 | 0.0099 | 0.0021 | 0.38 | | | | | | | | | | | | | 0.052 | | | | | | | | 836 |
| 57 | 0.28 | 0.89 | 3.00 | 0.0041 | 0.0158 | 0.0051 | 0.0001 | 0.01 | 0.0016 | | | | | | | | | | | | | 0.051 | | | | | | | 834 |
| 58 | 0.34 | 0.46 | 2.10 | 0.0091 | 0.0021 | 0.0112 | 0.0086 | 0.07 | 0.0010 | | | | | | | | | | | | | | 0.051 | | | | | | 804 |
| 59 | 0.21 | 1.05 | 3.80 | 0.0021 | 0.0103 | 0.0039 | 0.0044 | 0.10 | 0.0018 | | | | | | | | | | | | | | | 0.052 | | | | | 854 |
| 60 | 0.27 | 0.44 | 4.00 | 0.0122 | 0.0040 | 0.0068 | 0.0009 | 0.17 | | | | | | | | | | | | | | | | | 0.051 | | | | 816 |
| 61 | 0.36 | 0.99 | 2.50 | 0.0026 | 0.0006 | 0.0167 | 0.0028 | | 0.0020 | | | | | | | | | | | | | | | | | 0.051 | | | 824 |
| 62 | 0.36 | 1.43 | 3.60 | 0.0014 | 0.0024 | 0.0102 | 0.0027 | 0.06 | 0.0052 | | | | | | | | | | | | | | | | | | 0.052 | | 844 |
| 63 | 0.28 | 0.64 | 0.60 | 0.0030 | 0.0031 | 0.0105 | 0.0148 | 0.04 | 0.0002 | | | | | | | | | | | | | | | | | | | 0.051 | 822 |
| 64 | 0.25 | 0.50 | 2.80 | 0.0017 | 0.0064 | 0.0187 | 0.0015 | 0.01 | 0.0020 | 0.02 | 0.021 | | | | | | | | | | | | | | | | | | 825 |

Underline shows that it does not meet the claimed range.

[Table 4]

TABLE 4

| No. | Hot Rolling | | | Cold Rolling | First Heat Treatment | | | | | | | Second Heat Treatment | | | | | | | | Tempering | | Plating |
|---|---|---|---|---|---|---|---|---|---|---|---|---|---|---|---|---|---|---|---|---|---|---|
| | Heat Temp. (°C) | Finish Temp. (°C) | Coiling Temp. (°C) | Rolling Reduction (%) | Heat Temp. (°C) | Held Time (sec) | First-stage Cooling Cooling Rate (°C/s) | First-stage Cooling Stop Temp. (°C) | Cooling Rate (°C/s) | Stop Temp. (°C) | Heat Temp. (°C) | Held Time (sec) | First-stage Cooling Cooling Rate (°C/s) | First-stage Cooling Stop Temp. (°C) | Cooling Rate (°C/s) | Stop Temp. (°C) | Holding Temp. (°C) | Holding Time (sec) | Heat Temp. (°C) | Held Time (sec) | Existence |
| A | 1,228 | 958 | 213 | 53 | 900 | 375 | - | | 31 | 230 | 900 | 130 | - | | 45 | 210 | 100 | 150 | - | - | None |
| B | 1,338 | 899 | 543 | 84 | 890 | 225 | - | | 45 | 187 | 890 | 95 | - | | 36 | 180 | 250 | 300 | - | - | None |
| C | 1,337 | 975 | 331 | 30 | 880 | 90 | - | | 32 | 233 | 880 | 110 | - | | 22 | 105 | 105 | 100 | 250 | 60 | None |
| D | 1,263 | 867 | 116 | 66 | 890 | 314 | - | | 82 | 99 | 890 | 115 | - | | 146 | 70 | 70 | 100 | 300 | 90 | None |
| E | 1,114 | 978 | 120 | 62 | 880 | 403 | - | | 120 | 158 | 880 | 440 | 32 | 701 | 99 | 150 | 100 | 130 | 350 | 150 | None |
| F | 1,242 | 951 | 109 | 37 | 855 | 267 | - | | 174 | 226 | 860 | 472 | - | | 38 | 59 | 50 | 50 | 440 | 300 | None |
| G | 1,165 | 917 | 135 | 41 | 850 | 273 | - | | 168 | 209 | 851 | 316 | - | | 38 | 53 | 50 | 30 | 458 | 500 | None |
| H | 1,129 | 890 | 343 | 88 | 890 | 170 | - | | 35 | 299 | 875 | 469 | - | | 131 | 202 | 250 | 40 | - | - | None |
| I | 1,293 | 860 | 386 | 58 | 832 | 480 | - | | 93 | 182 | 880 | 510 | - | | 59 | 162 | 200 | 100 | - | - | None |
| J | 1,256 | 884 | 330 | 69 | 860 | 592 | - | | 142 | 229 | 870 | 346 | - | | 67 | 156 | 250 | 400 | - | - | None |
| K | 1,261 | 941 | 334 | 63 | 895 | 449 | - | | 101 | 149 | 900 | 390 | - | | 72 | 134 | 300 | 150 | - | - | None |
| L | 1,301 | 860 | 190 | 80 | 860 | 319 | - | | 161 | 123 | 871 | 207 | - | | 141 | 200 | 150 | 300 | - | - | None |

| N-o. | Hot Rolling | | | Cold Rolling | First Heat Treatment | | | | | | Second Heat Treatment | | | | | | | | Tempering | | Plating |
|---|---|---|---|---|---|---|---|---|---|---|---|---|---|---|---|---|---|---|---|---|---|
| | Heat Temp. (°C) | Finish Temp. (°C) | Coiling Temp. (°C) | Rolling Reduction (%) | Heat Temp. (°C) | Held Time (sec) | First-stage Cooling | | Cooling Rate (°C/s) | Stop Temp. (°C) | Heat Temp. (°C) | Held Time (sec) | First-stage Cooling | | Cooling Rate (°C/s) | Stop Temp. (°C) | Holding Temp. (°C) | Holding Time (sec) | Heat Temp. (°C) | Held Time (sec) | Existence |
| | | | | | | | Cooling Rate (°C/s) | Stop Temp. (°C) | | | | | Cooling Rate (°C/s) | Stop Temp. (°C) | | | | | | | |
| M | 1,319 | 988 | 215 | 43 | 880 | 194 | - | | 53 | 274 | 875 | 206 | 5 | 680 | 171 | 200 | 350 | 210 | - | - | None |
| N | 1,258 | 934 | 251 | 60 | 885 | 41 | - | | 112 | 211 | 877 | 14 | - | | 86 | 159 | 150 | 30 | - | - | None |
| O | 1,159 | 888 | 414 | 74 | 839 | 580 | - | | 168 | 54 | 843 | 269 | - | | 100 | 118 | 118 | 100 | - | - | Existence |
| P | 1,283 | 973 | 291 | 74 | 880 | 169 | - | | 145 | 81 | 880 | 123 | - | | 150 | 83 | 80 | 40 | - | - | None |
| Q | 1,174 | 904 | 132 | 43 | 890 | 102 | - | | 63 | 60 | 870 | 170 | 22 | 603 | 160 | 259 | 300 | 100 | - | - | None |
| R | 1,128 | 950 | 68 | 44 | 890 | 106 | - | | 194 | 91 | 890 | 248 | - | | 176 | 256 | 300 | 100 | - | - | Existence (Galvannealed1 |
| S | 1,273 | 975 | 270 | 81 | 879 | 341 | - | | 40 | 32 | 880 | 340 | - | | 136 | 216 | 250 | 100 | - | - | None |
| T | 1,247 | 922 | 397 | 55 | 888 | 185 | - | | 86 | 67 | 890 | 221 | - | | 78 | 208 | 200 | 50 | - | - | None |

EP 3 992 315 B1

[Table 5]

TABLE 5

| No. | Hot Rolling | | | Cold Rolling | First Heat Treatment | | | | Cool-ing Rate (°C/s) | Stop Tem-p. (°C) | Second Heat Treatment | | | | Cool-ing Rate (°C/s) | Stop Tem-p. (°C) | Hold-ing Temp. (°C) | Hold-ing Time (sec) | Tempering | | Plating |
|---|---|---|---|---|---|---|---|---|---|---|---|---|---|---|---|---|---|---|---|---|---|
| | Heat Tem-p. (°C) | Fin-ish Tem-p. (°C) | Coil-ing Tem-p. (°C) | Rolling Reduc-tion (%) | Heat Tem-p.e,,,p. (°C) | Held Tim-e (se-e) | First-stage Cooling Cool-ing Rate (°C/s) | Stop Tem-p. (°C) | | | Heat Tem-p. (°C) | Hel-d Tim-e (se-c) | First-stage Cooling Cool-ing Rate (°C/s) | Stop Tem-p. (°C) | | | | | Heat Tem-p. (°C) | Held Tim-e (se-c) | Existence |
| U | 1,21-7 | 935 | 270 | 49 | 900 | 544 | - | | 111 | 103 | 900 | 282 | - | | 101 | 157 | 140 | 100 | - | - | None |
| V | 1,12-5 | 949 | 121 | 37 | 910 | 387 | - | | 59 | 276 | 920 | 124 | - | | 60 | 72 | 70 | 100 | 400 | 100 | None |
| W | 1,26-9 | 901 | 479 | 80 | 880 | 264 | - | | 162 | 125 | 880 | 52 | - | | 162 | 201 | 150 | 50 | 450 | 300 | None |
| X | 1,211 | 917 | 393 | 65 | 883 | 400 | - | | 122 | 284 | 884 | 465 | - | | 185 | 282 | 250 | 40 | - | - | None |
| Y | 1,21-5 | 974 | 386 | 53 | 890 | 453 | 23 | 691 | 124 | 98 | 881 | 363 | - | | 161 | 233 | 200 | 30 | - | - | None |
| Z | 1,12-0 | 880 | 535 | 57 | 876 | 363 | 29 | 619 | 33 | 155 | 854 | 445 | - | | 69 | 197 | 150 | 40 | - | - | None |
| AA | 1,30-7 | 894 | 408 | 49 | 900 | 446 | 11 | 644 | 73 | 104 | 900 | 124 | - | | 119 | 135 | 100 | 30 | - | - | None |
| AB | 1,16-6 | 956 | 80 | 88 | 886 | 146 | - | | 106 | 244 | 890 | 221 | - | | 52 | 99 | 250 | 100 | - | - | Existence |
| AC | 1,16-6 | 956 | 80 | 88 | 886 | 146 | - | | 106 | 244 | 870 | 221 | - | | 52 | 99 | 250 | 100 | - | - | Existence (Galvan-nealed) |
| AD | 1,17-7 | 879 | 185 | 51 | 870 | 255 | 30 | 682 | 181 | 233 | 880 | 409 | - | | 120 | 123 | 100 | 150 | - | - | None |
| AE | 1,09-3 | 925 | 380 | 78 | 833 | 29 | - | | 161 | 122 | 819 | 523 | - | | 45 | 58 | 50 | 150 | - | - | None |

EP 3 992 315 B1

23

(continued)

| N-o. | Hot Rolling | | | Cold Rolling | First Heat Treatment | | | | | | Second Heat Treatment | | | | | | | | Tempering | | Plating |
|---|---|---|---|---|---|---|---|---|---|---|---|---|---|---|---|---|---|---|---|---|---|
| | | | | | Heat Temp.e,,,p. | Held Time | First-stage Cooling | | Cooling Rate | Stop Temp. | Heat Temp. | Held Time | First-stage Cooling | | Cooling Rate | Stop Temp. | Holding Temp. | Holding Time | Heat Temp. | Held Time | Existence |
| | Heat Temp. (°C) | Finish Temp. (°C) | Coiling Temp. (°C) | Rolling Reduction (%) | (°C) | (sec) | Cooling Rate (°C/s) | Stop Temp. (°C) | (°C/s) | (°C) | (°C) | (sec) | Cooling Rate (°C/s) | Stop Temp. (°C) | (°C/s) | (°C) | (°C) | (sec) | (°C) | (sec) | |
| AF | 1,27-1 | 846 | - | | | | | | | | | | | | | | | | | | |
| AG | 1,32-6 | 1005 | 315 | 32 | 877 | 516 | - | 73 | 74 | | 820 | 368 | - | 84 | 176 | 200 | 150 | | - | - | None |
| AH | 1,14-9 | 976 | 561 | 69 | 838 | 294 | - | 99 | 144 | | 852 | 483 | - | 107 | 230 | 200 | 150 | | - | - | None |
| AI | 1,23-1 | 974 | 80 | 28 | - | | | | | | | | | | | | | | | | |
| AJ | 1,33-4 | 867 | 287 | 92 | - | | | | | | | | | | | | | | | | |
| AK | 1,34-6 | 985 | 163 | 60 | 798 | 480 | - | 27 | 136 | | 865 | 255 | - | 94 | 200 | 200 | 150 | | - | - | None |
| AL | 1,30-6 | 898 | 328 | 47 | 850 | 0 | - | 160 | 222 | | 880 | 417 | - | 47 | 118 | 200 | 150 | | - | - | None |

Underline shows that it does not meet the recommended condition.

24

EP 3 992 315 B1

[Table 6]

[Table 6]

EP 3 992 315 B1

TABLE 6

| No. | Hot Rolling | | | Cold Rolling | First Heat Treatment | | | | | | | Second Heat Treatment | | | | | | | | Tempering | | Plating |
|---|---|---|---|---|---|---|---|---|---|---|---|---|---|---|---|---|---|---|---|---|---|---|
| | Heat Temp. (°C) | Finish Temp. (°C) | Coiling Temp. (°C) | Rolling Reduction (%) | Heat Temp. (°C) | Held Time (sec) | First-stage Cooling | | Coiling Rate (°C/s) | Stop Temp. (°C) | Heat Temp. (°C) | Held Time (sec) | First-stage Cooling | | Coiling Rate (°C/s) | Stop Temp. (°C) | Holding Temp. (°C) | Holding Time (sec) | Heat Temp. (°C) | Held Time (sec) | Existence |
| | | | | | | | Coiling Rate (°C/s) | Stop Temp. (°C) | | | | | Coiling Rate (°C/s) | Stop Temp. (°C) | | | | | | | |
| AM | 1,262 | 942 | 98 | 41 | 900 | 230 | 0.1 | 682 | 139 | 255 | 900 | 127 | 51 | 689 | 144 | 195 | 200 | 150 | - | - | None |
| AN | 1,313 | 963 | 317 | 61 | 850 | 259 | 25 | 600 | 139 | 233 | 850 | 82 | | - | 34 | 46 | 200 | 150 | - | - | None |
| AO | 1,201 | 949 | 29 | 85 | 882 | 339 | | - | 14 | 212 | 856 | 112 | | - | 182 | 170 | 200 | 150 | - | - | None |
| AP | 1,151 | 867 | 245 | 78 | 842 | 496 | | - | 62 | 400 | 881 | 312 | | - | 83 | 32 | 200 | 150 | - | - | None |
| AO | 1,235 | 944 | 477 | 32 | 821 | 179 | | - | 53 | 63 | 750 | 417 | | - | 142 | 145 | 200 | 150 | - | - | None |
| AR | 1,251 | 882 | 384 | 53 | 950 | 362 | | - | 36 | 53 | 950 | 1 | | - | 72 | 154 | 200 | 150 | - | - | None |
| AS | 1,245 | 892 | 463 | 71 | 888 | 542 | | - | 75 | 208 | 842 | 402 | 0.01 | 696 | 128 | 95 | 200 | 150 | - | - | None |
| AT | 1,271 | 971 | 153 | 77 | 900 | 507 | | - | 116 | 187 | 900 | 145 | 5 | 595 | 35 | 268 | 200 | 150 | - | - | None |
| AU | 1,177 | 996 | 291 | 79 | 863 | 111 | | - | 168 | 158 | 850 | 585 | | - | 15 | 74 | 200 | 150 | - | - | None |
| AV | 1,308 | 965 | 322 | 80 | 874 | 83 | | - | 173 | 134 | 864 | 498 | | - | 117 | 309 | 200 | 150 | - | - | None |
| AW | 1,284 | 870 | 382 | 85 | 845 | 487 | | - | 111 | 246 | 853 | 179 | | - | 157 | 150 | 500 | 150 | - | - | None |
| AX | 1,247 | 949 | 250 | 64 | 860 | 477 | | - | 96 | 290 | 856 | 274 | | - | 138 | 267 | 280 | | - | - | None |
| AY | 1,144 | 913 | 134 | 48 | 880 | 143 | | - | 150 | 68 | 880 | 140 | | - | 41 | 203 | 200 | 150 | 510 | 300 | None |
| AZ | 1,130 | 961 | 404 | 51 | | | - | | | | 868 | 313 | | - | 170 | 100 | 200 | 150 | - | - | None |
| AY | 1,228 | 958 | 213 | 53 | 1150 | 375 | | - | 31 | 230 | 900 | 130 | | - | 45 | 210 | 100 | 150 | - | - | None |

Underline shows that it does not meet the recommended condition.

[Table 7]

TABLE 7

| Test No. | Steel No. | Prodction No. | Thickness (mm) | Volume Fraction of Microstructure (%) | | | | | | TS (MPa) | El (%) | Standard Deviation of Macro hardness | Variations in Micro Hardness (Number) | λ (%) | Crash Resistance | | | | | Remarks |
|---|---|---|---|---|---|---|---|---|---|---|---|---|---|---|---|---|---|---|---|---|
| | | | | F | P | B | Retained γ | M | TM | | | | | | α (deg) | ① | TS×El | TS×λ | Evalu-ation | |
| 1 | 1 | A | 1.4 | - | - | - | - | - | 100 | 1,889 | 8.2 | 23 | 9 | 21 | 52 | 2 | 15,492 | 39,674 | ○ | Invention Steel |
| 2 | 2 | B | 1.4 | - | - | - | - | - | 100 | 1,422 | 10.4 | 27 | 9 | 40 | 63 | 13 | 14,785 | 56,867 | ○ | Invention Steel |
| 3 | 3 | C | 0.8 | - | - | - | - | - | 100 | 2,061 | 7 | 20 | 6 | 24 | 63 | 8 | 14,428 | 49,467 | ○ | Invention Steel |
| 4 | 4 | D | 1.4 | - | - | - | - | - | 100 | 1,666 | 9.3 | 24 | 6 | 23 | 59 | 9 | 15,493 | 38,315 | ○ | Invention Steel |
| 5 | 5 | E | 1.4 | - | - | 2 | - | - | 98 | 1,597 | 10 | 28 | 8 | 30 | 63 | 13 | 15,972 | 47,917 | ○ | Invention Steel |
| 6 | 6 | F | 1.4 | - | - | - | - | - | 100 | 1,720 | 9.8 | 27 | 8 | 22 | 60 | 10 | 16,857 | 37,843 | ○ | Invention Steel |
| 7 | 7 | G | 1.4 | - | - | - | - | - | 100 | 2,256 | 8.6 | 21 | 5 | 19 | 51 | 1 | 19,404 | 42,870 | ○ | Invention Steel |
| 8 | 8 | H | 1.4 | - | - | - | - | - | 100 | 1,428 | 11.2 | 23 | 8 | 38 | 66 | 16 | 15,996 | 54,272 | ○ | Invention Steel |
| 9 | 9 | I | 1.4 | - | - | - | - | - | 100 | 1,416 | 10.8 | 23 | 8 | 36 | 63 | 13 | 15,298 | 50,992 | ○ | Invention Steel |
| 10 | 10 | J | 1.4 | - | - | - | - | - | 100 | 1,409 | 11.6 | 20 | 6 | 39 | 68 | 18 | 16,350 | 54,968 | ○ | Invention Steel |
| 11 | 11 | K | 1.4 | - | - | - | - | - | 100 | 1,504 | 10.8 | 21 | 7 | 41 | 63 | 13 | 16,241 | 61,655 | ○ | Invention Steel |
| 12 | 12 | L | 1.4 | - | - | 3 | 1 | - | 96 | 2,039 | 9.6 | 29 | 8 | 18 | 51 | 1 | 19,574 | 36,701 | ○ | Invention Steel |
| 13 | 13 | M | 1.4 | 4 | 1 | - | - | - | 95 | 1,726 | 10.6 | 30 | 7 | 23 | 58 | 8 | 18,292 | 39,691 | ○ | Invention Steel |
| 14 | 14 | N | 1.0 | - | - | - | - | - | 100 | 2,039 | 9.2 | 28 | 9 | 17 | 58 | 5 | 18,758 | 34,662 | ○ | Invention Steel |
| 15 | 15 | O | 1.4 | - | - | - | - | - | 100 | 1,934 | 8.6 | 25 | 6 | 19 | 53 | 3 | 16,634 | 36,750 | ○ | Invention Steel |
| 16 | 16 | P | 1.4 | - | - | - | - | - | 100 | 1,831 | 9.2 | 26 | 7 | 21 | 54 | 4 | 16,847 | 38,456 | ○ | Invention Steel |
| 17 | 17 | Q | 1.4 | 3 | - | 2 | - | - | 95 | 1,718 | 10.2 | 30 | 9 | 23 | 59 | 9 | 17,525 | 39,518 | ○ | Invention Steel |
| 18 | 18 | R | 1.4 | - | - | 4 | 1 | - | 95 | 1,446 | 9.6 | 29 | 8 | 36 | 61 | 11 | 13,884 | 52,064 | ○ | Invention Steel |
| 19 | 19 | S | 1.4 | - | - | - | - | - | 100 | 1,641 | 10.2 | 29 | 8 | 24 | 56 | 6 | 16,743 | 39,395 | ○ | Invention Steel |
| 20 | 20 | T | 1.4 | - | - | - | - | - | 100 | 1,538 | 10.3 | 29 | 8 | 31 | 59 | 9 | 15,840 | 47,674 | ○ | Invention Steel |

The each symbol of the Microstructure means as follows:

F:ferrite, P:pearlite, B:bainite, TM:tempered martensite, M:as-quenched martensite

① means the calculated value of "α-($2.37t^2$-14t+65)", and the value is good if it is 0 or more.

" - " means the microstructure was not observed.

[Table 8]

TABLE 8

| Test No. | Steel No. | Prodction No. | Thickness (mm) | Volume Fraction of Microstructure (%) | | | | | | TS (MPa) | El (%) | Standard Deviation of Macro hardness | Variations in Micro Hardness (Number) | λ (%) | Crash Resistance | | | | | Remarks |
| --- | --- | --- | --- | --- | --- | --- | --- | --- | --- | --- | --- | --- | --- | --- | --- | --- | --- | --- | --- | --- |
| | | | | F | P | B | Retained γ | M | TM | | | | | | α (deg) | ① | TS×El | TS×λ | Evalu-ation | |
| 21 | 21 | U | 1.4 | - | - | - | - | - | 100 | 1,511 | 10.6 | 29 | 8 | 33 | 61 | 11 | 16,018 | 49,866 | ○ | Invention Steel |
| 22 | 22 | V | 1.4 | - | - | - | - | - | 100 | 1,417 | 10.8 | 24 | 7 | 39 | 65 | 15 | 15,305 | 55,267 | ○ | Invention Steel |
| 23 | 23 | W | 1.4 | - | - | - | - | - | 100 | 1,421 | 10.6 | 24 | 7 | 37 | 62 | 12 | 15,068 | 52,594 | ○ | Invention Steel |
| 24 | 24 | X | 1.4 | - | - | - | - | - | 100 | 1,415 | 10.2 | 23 | 6 | 35 | 61 | 11 | 14,431 | 49,519 | ○ | Invention Steel |
| 25 | 25 | Y | 1.4 | - | - | - | - | - | 100 | 1,402 | 10.6 | 21 | 6 | 41 | 66 | 16 | 14,866 | 57,502 | ○ | Invention Steel |
| 26 | 26 | Z | 1.4 | - | - | - | - | - | 100 | 1,953 | 8.6 | 25 | 6 | 17 | 51 | 1 | 16,797 | 33,203 | ○ | Invention Steel |
| 27 | 27 | AA | 1.4 | - | - | - | - | - | 100 | 1,548 | 10.1 | 26 | 7 | 28 | 57 | 7 | 15,635 | 43,343 | ○ | Invention Steel |
| 28 | 28 | AB | 1.6 | - | - | - | - | - | 100 | 1,419 | 11.3 | 22 | 6 | 36 | 55 | 6 | 16,035 | 51,085 | ○ | Invention Steel |
| 29 | 29 | AC | 1.4 | - | - | - | - | - | 100 | 1,407 | 11.5 | 25 | 8 | 38 | 59 | 9 | 16,182 | 53,469 | ○ | Invention Steel |
| 30 | 30 | AD | 1.4 | - | - | - | - | - | 100 | 1,543 | 10.6 | 20 | 6 | 42 | 64 | 14 | 16,358 | 64,815 | ○ | Invention Steel |
| 31 | 31 | _AE_ | 1.4 | - | - | - | - | - | 100 | 2,231 | 8.8 | _38_ | _15_ | 17 | 40 | _-10_ | 19,637 | 37,935 | × | Comparative Steel |
| 32 | 32 | _AF_ | It cannot be tested due to shape defect of hot rolled plate. | | | | | | | | | | | | | | | | | Comparative Steel |
| 33 | 33 | _AG_ | 1.4 | - | - | - | - | - | 100 | 1,348 | 9.1 | _46_ | _18_ | 36 | 58 | 8 | _12,271_ | 48,545 | × | Comparative Steel |
| 34 | 1 | _AH_ | 1.4 | - | - | - | - | - | 100 | 1,680 | 9.0 | 24 | _19_ | 19 | 56 | 6 | 15,120 | _31,920_ | × | Comparative Steel |
| 35 | 2 | _AI_ | It cannot be tested due to shape defect of cold rolled plate. | | | | | | | | | | | | | | | | | Comparative Steel |
| 36 | 3 | _AJ_ | It cannot be tested due to the steel plate breaks during cold rolling | | | | | | | | | | | | | | | | | Comparative Steel |
| 37 | 5 | _AK_ | 1.4 | 15 | - | - | - | - | _85_ | 1,250 | 13 | _45_ | _18_ | 26 | 73 | 23 | 16,250 | _32,500_ | × | Comparative Steel |
| 38 | 9 | _AL_ | 1.4 | 14 | - | - | - | - | _86_ | 1,381 | 14.6 | _43_ | _17_ | 18 | 69 | 19 | 20,159 | _24,854_ | × | Comparative Steel |
| 39 | 11 | _AM_ | 1.4 | 25 | 5 | 5 | - | - | _65_ | 1,320 | 16 | _45_ | _18_ | 16 | 69 | 19 | 21,120 | _21,120_ | × | Comparative Steel |
| 40 | 13 | AN | 1.4 | 3 | - | 2 | - | - | 95 | 1,410 | 14 | 28 | 8 | 25 | 72 | 22 | 19,740 | 35,250 | ○ | Invention Steel |

Underline shows it does not meet the claimed range, the recommeded condition, or the target performance.

The each symbol of the Microstructure means as follows:

F:ferrite, P:pearlite, B:bainite, TM:tempered martensite, M:as-quenched martensite

① means the calculated value of "α-(2.37$t^2$-14t+65)", and the value is good if it is 0 or more.

" - " means the microstructure was not observed.

[Table 9]

TABLE 9

| Test No. | Steel No. | Proction No. | Thickness (mm) | Volume Fraction of Microstructure (%) | | | | | | TS (MPa) | El (%) | Standard Deviation of Macro hardness | Variations in Micro Hardness (Number) | λ (%) | Crash Resistance | | | | | Remarks |
|---|---|---|---|---|---|---|---|---|---|---|---|---|---|---|---|---|---|---|---|---|
| | | | | F | P | B | Retained γ | M | TM | | | | | | α (deg) | ① | TS×El | TS×λ | Evalu-ation | |
| 41 | 15 | AO | 1.4 | - | - | 30 | - | - | 70 | 1,380 | 10.1 | 32 | 16 | 23 | 48 | -2 | 13,938 | 31,740 | × | Comparative Steel |
| 42 | 16 | AP | 1.4 | - | - | - | - | - | 100 | 1,659 | 9 | 45 | 16 | 16 | 48 | -2 | 14,928 | 26,539 | × | Comparative Steel |
| 43 | 18 | AQ | 1.4 | 80 | - | - | - | - | 20 | 760 | 30 | 50 | 18 | 8 | 82 | 32 | 22,800 | 6,080 | × | Comparative Steel |
| 44 | 22 | AR | 1.4 | 60 | - | - | - | - | 40 | 960 | 19 | 35 | 16 | 8 | 75 | 25 | 18,240 | 7,680 | × | Comparative Steel |
| 45 | 24 | AS | 1.4 | 20 | - | 12 | - | - | 68 | 850 | 15 | 43 | 13 | 34 | 85 | 35 | 12,750 | 28,900 | × | Comparative Steel |
| 46 | 27 | AT | 1.4 | 10 | 10 | 40 | - | - | 40 | 1,290 | 10.2 | 44 | 15 | 6 | 71 | 21 | 13,158 | 7,740 | × | Comparative Steel |
| 47 | 29 | AU | 1.4 | 5 | - | 20 | 5 | 10 | 60 | 1,290 | 15 | 35 | 15 | 12 | 68 | 18 | 19,350 | 15,480 | × | Comparative Steel |
| 48 | 30 | AV | 1.4 | - | - | - | - | - | 100 | 960 | 9.4 | 22 | 8 | 42 | 81 | 31 | 9,024 | 40,320 | × | Comparative Steel |
| 49 | 31 | AW | 1.4 | - | - | - | - | - | 100 | 1,380 | 8.4 | 25 | 7 | 33 | 64 | 14 | 11,592 | 45,540 | × | Comparative Steel |
| 50 | 32 | AX | 1.4 | - | - | - | - | - | 100 | 1,350 | 8.8 | 24 | 8 | 50 | 66 | 16 | 11,880 | 67,500 | × | Comparative Steel |
| 51 | 32 | AY | 1.4 | - | - | - | - | - | 100 | 1,949 | 9.5 | 25 | 12 | 16 | 51 | 1 | 18,516 | 31,184 | × | Comparative Steel |
| 52 | 32 | AZ | 1.4 | - | - | - | - | - | 100 | 1,820 | 9.2 | 29 | 15 | 20 | 45 | -5 | 16,744 | 36,400 | × | Comparative Steel |
| 53 | 34 | A | 1.4 | - | - | - | - | - | 100 | 1,220 | 8.9 | 22 | 5 | 46 | 84 | 34 | 10,858 | 56,120 | × | Comparative Steel |
| 54 | 35 | B | 1.4 | - | - | - | - | - | 100 | 2,200 | 7.7 | 32 | 12 | 12 | 38 | -12 | 16,940 | 26,400 | × | Comparative Steel |
| 55 | 36 | C | 1.4 | - | - | - | - | - | 100 | 2,321 | 9.0 | 31 | 11 | 11 | 43 | -7 | 20,885 | 25,527 | × | Comparative Steel |
| 56 | 37 | D | 1.4 | 15 | 10 | 50 | 10 | 5 | 10 | 580 | 21 | 45 | 12 | 56 | 92 | 42 | 12,180 | 32,480 | × | Comparative Steel |
| 57 | 38 | E | 1.4 | - | - | - | - | - | 100 | 1,560 | 9.2 | 34 | 11 | 11 | 43 | -7 | 14,352 | 17,160 | × | Comparative Steel |
| 58 | 39 | F | 1.4 | - | - | - | - | - | 100 | 2,244 | 8.4 | 31 | 10 | 11 | 44 | -6 | 18,848 | 24,682 | × | Comparative Steel |
| 59 | 40 | G | 1.4 | - | - | - | - | - | 100 | 1,965 | 7.9 | 33 | 10 | 12 | 51 | 1 | 15,520 | 23,575 | × | Comparative Steel |
| 60 | 41 | H | 1.4 | - | - | - | - | - | 100 | 1,714 | 9.3 | 34 | 11 | 11 | 42 | -8 | 15,937 | 18,850 | × | Comparative Steel |

Underline shows it does not meet the claimed range, the recommeded condition, or the target performance.

The each symbol of the Microstructure means as follows:

F:ferrite, P:pearlite, B:bainite, TM:tempered martensite, M:as-quenched martensite

① means the calculated value of "α-(2.37t²-14t+65)", and the value is good if it is 0 or more.

" - " means the microstructure was not observed.

[Table 10]

TABLE 10

| Test No. | Steel No. | Prodction No. | Thickness (mm) | Volume Fraction of Microstructure (%) | | | | | | TS (MPa) | El (%) | Standard Deviation of Macro hardness | Variations in Micro Hardness (Number) | λ (%) | Crash Resistance | | | | Evalu-ation | Remarks |
|---|---|---|---|---|---|---|---|---|---|---|---|---|---|---|---|---|---|---|---|---|
| | | | | F | P | B | Retained γ | M | TM | | | | | | α (deg) | ① | TS×El | TS×λ | | |
| 61 | 42 | J | 1.4 | - | - | - | - | - | 100 | 1,768 | 9.4 | 34 | 13 | 10 | 44 | -16 | 16,617 | 17,677 | × | Comparative Steel |
| 62 | 43 | K | 1.4 | - | - | - | - | - | 100 | 1,458 | 8.8 | 33 | 11 | 11 | 46 | -14 | 12,828 | 16,035 | × | Comparative Steel |
| 63 | 44 | L | 1.4 | - | - | 4 | - | - | 96 | 1,590 | 8.6 | 36 | 11 | 10 | 44 | -16 | 13,672 | 15,897 | × | Comparative Steel |
| 64 | 45 | M | 1.4 | - | - | - | - | - | 100 | 1,599 | 8.6 | 37 | 13 | 9 | 48 | -12 | 13,751 | 14,391 | × | Comparative Steel |
| 65 | 46 | N | 1.4 | - | - | - | - | - | 100 | 1,699 | 8.4 | 34 | 14 | 9 | 48 | -12 | 14,275 | 15,295 | × | Comparative Steel |
| 66 | 47 | O | 1.4 | - | - | - | - | - | 100 | 1,649 | 9.5 | 34 | 11 | 10 | 51 | -9 | 15,663 | 16,488 | × | Comparative Steel |
| 67 | 48 | P | 1.4 | - | - | - | - | - | 100 | 1,850 | 9.7 | 34 | 11 | 10 | 45 | -15 | 17,947 | 18,502 | × | Comparative Steel |
| 68 | 49 | Q | 1.4 | 3 | - | 5 | - | - | 92 | 1,629 | 10.2 | 37 | 14 | 9 | 42 | -18 | 16,615 | 14,661 | × | Comparative Steel |
| 69 | 50 | R | 1.4 | 2 | - | 4 | - | 1 | 93 | 1,417 | 9.8 | 33 | 12 | 12 | 46 | -14 | 13,883 | 17,000 | × | Comparative Steel |
| 70 | 51 | S | 1.4 | - | - | - | - | - | 100 | 2,096 | 8.9 | 31 | 13 | 13 | 47 | -13 | 18,652 | 27,244 | × | Comparative Steel |
| 71 | 52 | T | 1.4 | - | - | - | - | - | 100 | 2,095 | 9.6 | 39 | 15 | 9 | 44 | -16 | 20,109 | 18,852 | × | Comparative Steel |
| 72 | 53 | U | 1.4 | - | - | - | - | - | 100 | 1,707 | 7.4 | 32 | 13 | 15 | 42 | -18 | 12,634 | 25,609 | × | Comparative Steel |
| 73 | 54 | V | 1.4 | - | - | - | - | - | 100 | 1,655 | 7.8 | 31 | 11 | 16 | 41 | -19 | 12,910 | 26,481 | × | Comparative Steel |
| 74 | 55 | W | 1.4 | - | - | - | - | - | 100 | 1,498 | 6.9 | 31 | 11 | 17 | 44 | -16 | 10,337 | 25,468 | × | Comparative Steel |
| 75 | 56 | X | 1.4 | - | - | - | - | - | 100 | 1,430 | 6.4 | 32 | 12 | 19 | 46 | -14 | 9,152 | 27,170 | × | Comparative Steel |
| 76 | 57 | X | 1.4 | - | - | - | - | - | 100 | 1,612 | 9.1 | 36 | 11 | 13 | 45 | -15 | 14,669 | 20,956 | × | Comparative Steel |
| 77 | 58 | X | 1.4 | - | - | - | - | - | 100 | 1,933 | 8.7 | 35 | 12 | 12 | 44 | -16 | 16,817 | 23,196 | × | Comparative Steel |
| 78 | 59 | X | 1.4 | - | - | - | - | - | 100 | 1,572 | 9.1 | 37 | 13 | 10 | 44 | -16 | 14,307 | 15,722 | × | Comparative Steel |
| 79 | 60 | X | 1.4 | - | - | - | - | - | 100 | 1,464 | 8.8 | 40 | 13 | 4 | 48 | -12 | 12,886 | 5,857 | × | Comparative Steel |
| 80 | 61 | X | 1.4 | - | - | - | - | - | 100 | 1,859 | 7.9 | 40 | 14 | 5 | 49 | -11 | 14,688 | 9,296 | × | Comparative Steel |
| 81 | 62 | X | 1.4 | - | - | - | - | - | 100 | 2,100 | 8.3 | 31 | 14 | 11 | 43 | -17 | 17,430 | 23,100 | × | Comparative Steel |
| 82 | 63 | X | 1.4 | - | - | - | - | - | 100 | 2,100 | 9.3 | 32 | 13 | 12 | 42 | -18 | 19,530 | 25,200 | × | Comparative Steel |
| 83 | 64 | F | 1.4 | - | - | - | - | - | 100 | 1,720 | 9.8 | 25 | 6 | 28 | 60 | 10 | 16,857 | 48,164 | ○ | Invention Steel |
| 84 | 1 | AY | 1.4 | - | - | - | - | 2 | 98 | 1,889 | 8.2 | 34 | 9 | 17 | 52 | 2 | 15,492 | 32,117 | × | Comparative Steel |

Underline shows it does not meet the claimed range, the recommeded condition, or the target performance.

The each symbol of the Microstructure means as follows:

F:ferrite, P:pearlite, B:bainite, TM:tempered martensite, M:as-quenched martensite

① means the calculated value of "α-(2.37t²-14t+65)", and the value is good if it is 0 or more.

" - " means the microstructure was not observed.

## TABLE 11

[Table 11]

| No. | Chemical composition(mass% the balance: Fe and impurities) | | | | | | | | | | | | | | | | | | | | | | | | | | | | | Ac3 |
|---|---|---|---|---|---|---|---|---|---|---|---|---|---|---|---|---|---|---|---|---|---|---|---|---|---|---|---|---|---|
| | C | Si | Mn | P | S | N | O | Al | B | Ti | Nb | V | Mo | Cr | Co | Ni | Cu | W | Ta | Sn | Sb | As | Mg | Ca | Y | Zr | La | Ce | |
| 101 | 0.28 | 0.37 | 2.50 | 0.0150 | 0.0155 | 0.0118 | 0.0015 | 0.17 | 0.0014 | 0.01 | 0.003 | - | - | - | - | - | - | - | - | - | - | - | - | - | - | - | - | - | - | 810 |
| 102 | 0.20 | 1.79 | 3.10 | 0.0014 | 0.0100 | 0.0035 | 0.0001 | - | 0.0018 | - | - | - | - | 0.20 | - | - | - | - | - | - | - | - | - | - | - | - | - | - | - | 890 |
| 103 | 0.19 | 1.14 | 2.20 | 0.0028 | 0.0120 | 0.0030 | 0.0030 | 0.22 | 0.0058 | - | - | - | 0.15 | - | - | - | - | - | - | - | - | - | - | - | - | - | - | - | - | 868 |
| 104 | 0.25 | 1.47 | 3.50 | 0.0043 | 0.0018 | 0.0119 | 0.0153 | 0.10 | 0.0020 | 0.09 | - | 0.08 | - | - | - | - | - | - | - | - | - | 0.015 | - | - | - | - | - | - | - | 873 |
| 105 | 0.22 | 0.82 | 2.80 | 0.0046 | 0.0132 | 0.0150 | 0.0034 | 0.05 | 0.0001 | - | - | - | 0.05 | - | - | - | - | - | - | - | - | - | - | - | - | - | - | - | - | 843 |
| 106 | 0.25 | 0.64 | 2.60 | 0.0017 | 0.0064 | 0.0187 | 0.0015 | 0.01 | 0.0020 | 0.02 | 0.021 | - | 0.10 | - | - | - | - | - | - | - | 0.012 | - | - | - | - | - | - | - | - | 831 |
| 107 | 0.27 | 1.49 | 2.10 | 0.0126 | 0.0168 | 0.0151 | 0.0045 | 0.89 | 0.0010 | - | - | - | - | - | - | 0.32 | 0.091 | - | - | - | - | - | - | - | - | - | - | - | - | 857 |
| 108 | 0.22 | 1.15 | 1.80 | 0.0038 | 0.0016 | 0.0138 | 0.0015 | 0.11 | 0.0042 | - | - | - | - | - | - | - | - | - | - | - | - | - | - | - | - | - | - | - | - | 857 |
| 109 | 0.24 | 0.22 | 4.50 | 0.0047 | 0.0009 | 0.0182 | 0.0031 | 0.18 | 0.0006 | - | - | - | - | - | - | - | - | - | 0.010 | - | - | - | - | - | - | - | - | - | - | 811 |
| 110 | 0.18 | 0.71 | 1.00 | 0.0026 | 0.0016 | 0.0107 | 0.0037 | 0.21 | 0.0008 | - | 0.020 | - | - | - | - | - | - | - | - | - | - | - | 0.021 | - | - | - | - | - | - | 847 |
| 111 | 0.27 | 1.90 | 3.10 | 0.0027 | 0.0047 | 0.0180 | 0.0005 | 0.06 | 0.0014 | 0.10 | - | - | 0.15 | - | - | - | - | - | - | - | - | - | - | - | - | - | - | - | - | 885 |
| 112 | 0.35 | 1.31 | 4.00 | 0.0113 | 0.0015 | 0.0156 | 0.0040 | 0.20 | 0.0022 | - | - | - | - | - | - | - | - | - | - | - | - | - | - | 0.004 | - | - | - | - | 0.010 | 839 |
| 113 | 0.30 | 0.88 | 2.20 | 0.0005 | 0.0033 | 0.0071 | 0.0156 | 0.15 | 0.0082 | - | - | - | - | - | - | - | - | - | - | - | - | - | - | - | - | 0.016 | 0.002 | - | - | 829 |
| 114 | 0.26 | 1.23 | 0.60 | 0.0186 | 0.0009 | 0.0049 | 0.0004 | 0.23 | 0.0006 | - | - | - | - | 1.58 | - | - | - | - | - | - | - | - | - | - | - | 0.007 | - | - | - | 852 |
| 115 | 0.33 | 0.88 | 3.90 | 0.0038 | 0.0030 | 0.0108 | 0.0149 | 0.06 | 0.0025 | - | - | - | - | - | - | - | - | - | - | - | - | - | - | - | 0.005 | - | - | - | - | 824 |
| 116 | 0.28 | 0.17 | 1.60 | 0.0020 | 0.0029 | 0.0016 | 0.0001 | - | 0.0018 | - | - | - | - | - | - | 0.72 | - | - | - | - | - | - | - | - | - | - | - | - | - | 790 |
| 117 | 0.19 | 1.58 | 1.30 | 0.0010 | 0.0092 | 0.0040 | 0.0033 | 0.02 | 0.0018 | - | - | - | - | - | - | - | - | 0.008 | - | - | - | - | - | - | - | - | - | - | - | 883 |
| 118 | 0.22 | 0.20 | 2.20 | 0.0007 | 0.0010 | 0.0035 | 0.0103 | 0.15 | 0.0079 | - | - | - | - | - | - | - | 0.200 | - | - | - | - | - | - | - | - | - | - | - | - | 815 |
| 119 | 0.20 | 1.55 | 2.00 | 0.0027 | 0.0037 | 0.0068 | 0.0025 | 0.16 | 0.0016 | - | - | - | - | - | 0.20 | - | - | - | - | - | - | - | - | - | - | - | - | - | - | 880 |
| 120 | 0.27 | 0.68 | 1.10 | 0.0020 | 0.0037 | 0.0067 | 0.0051 | 0.16 | 0.0007 | - | - | - | 0.13 | 0.50 | - | - | - | - | - | - | - | - | - | - | - | - | - | - | - | 830 |

[Table 12]

TABLE 12

Chemical composition(mass% the balance: Fe and impurities)

| No. | C | Si | Mn | P | S | N | O | Al | B | Ti | Nb | V | Mo | Cr | Co | Ni | Cu | W | Ta | Sn | Sb | As | Mg | Ca | Y | Zr | La | Ce | Ac3 |
|---|---|---|---|---|---|---|---|---|---|---|---|---|---|---|---|---|---|---|---|---|---|---|---|---|---|---|---|---|---|
| 121 | 0.19 | 0.27 | 1.30 | 0.0030 | 0.0068 | 0.0006 | 0.0012 | - | 0.0016 | 0.01 | - | - | - | - | - | - | - | - | - | - | - | - | - | - | - | - | - | - | 825 |
| 122 | 0.18 | 1.91 | 1.50 | 0.0027 | 0.0016 | 0.0023 | 0.0014 | 0.10 | 0.0008 | - | 0.013 | - | - | - | - | - | - | - | - | - | - | - | - | - | - | - | - | - | 899 |
| 123 | 0.21 | 0.38 | 0.70 | 0.0036 | 0.0164 | 0.0007 | 0.0156 | 0.67 | 0.0012 | - | - | - | - | 0.23 | - | - | - | - | - | - | - | - | - | - | - | - | - | - | 824 |
| 124 | 0.18 | 0.44 | 0.60 | 0.0016 | 0.0115 | 0.0015 | 0.0015 | 0.03 | 0.0016 | 0.05 | - | - | - | - | - | 0.32 | - | - | - | - | - | - | - | - | - | - | - | - | 829 |
| 125 | 0.19 | 0.20 | 1.70 | 0.0014 | 0.0171 | 0.0055 | 0.0022 | 0.08 | 0.0010 | - | 0.038 | 0.22 | - | - | - | - | - | - | - | - | - | - | - | - | - | - | - | - | 844 |
| 126 | 0.34 | 0.10 | 1.30 | 0.0006 | 0.0015 | 0.0113 | 0.0137 | 0.23 | 0.0019 | - | - | - | - | - | 0.12 | - | - | - | - | - | - | - | - | - | - | - | - | - | 787 |
| 127 | 0.20 | 1.44 | 2.80 | 0.0027 | 0.0180 | 0.0034 | 0.0035 | 0.06 | 0.0019 | - | 0.018 | - | - | - | - | - | - | - | - | - | - | - | - | - | - | - | - | - | 875 |
| 128 | 0.21 | 0.34 | 4.10 | 0.0079 | 0.0029 | 0.0011 | 0.0030 | 0.17 | 0.0008 | 0.01 | - | - | 0.15 | - | - | - | - | - | - | - | - | - | - | - | - | - | - | - | 828 |
| 129 | 0.19 | 0.33 | 4.10 | 0.0013 | 0.0044 | 0.0045 | 0.0028 | 0.15 | 0.0007 | - | 0.043 | - | - | - | - | - | - | 0.020 | - | - | - | - | - | - | - | - | - | - | 827 |
| 130 | 0.20 | 0.82 | 1.60 | 0.0040 | 0.0012 | 0.0035 | 0.0015 | 0.74 | 0.0068 | - | 0.015 | 0.05 | - | - | - | - | - | - | - | - | 0.020 | - | - | - | - | - | - | - | 852 |
| 131 | 0.38 | 0.47 | 1.40 | 0.0052 | 0.0004 | 0.0033 | 0.0181 | - | 0.0030 | 0.01 | - | - | - | - | - | - | - | - | - | - | - | - | - | - | - | - | - | - | 797 |
| 132 | 0.28 | 0.65 | 3.70 | 0.0034 | 0.0028 | 0.0141 | 0.0040 | 0.06 | 0.0091 | - | - | - | - | - | - | - | - | - | - | - | - | - | - | - | - | - | - | - | 823 |
| 133 | 0.35 | 0.53 | 3.20 | 0.0024 | 0.0103 | 0.0033 | 0.0035 | 0.08 | 0.0016 | - | - | - | - | - | - | - | - | - | - | - | - | - | - | - | - | - | - | - | 847 |
| 134 | 0.28 | 1.87 | 4.70 | 0.0005 | 0.0031 | 0.0027 | 0.0004 | 0.86 | 0.0036 | - | - | 0.41 | - | - | - | - | - | - | - | - | - | - | - | - | - | - | - | - | 877 |
| 135 | 0.18 | 0.20 | 3.60 | 0.0031 | 0.0130 | 0.0027 | 0.0121 | 0.85 | 0.0011 | - | 0.016 | - | - | - | - | - | - | - | - | - | - | - | - | - | - | - | - | - | 839 |
| 136 | 0.23 | 0.80 | 2.10 | 0.0032 | 0.0036 | 0.0039 | 0.0087 | 0.06 | - | - | - | 0.14 | - | - | - | - | - | - | - | - | - | - | - | - | - | - | - | - | 839 |
| 137 | 0.22 | 1.00 | 2.30 | 0.0033 | 0.0035 | 0.0084 | 0.0071 | 0.05 | - | - | - | - | - | - | - | - | - | - | - | - | - | - | - | - | - | - | - | - | 850 |
| 138 | 0.24 | 1.20 | 2.20 | 0.0029 | 0.0033 | 0.0057 | 0.0010 | 0.03 | - | - | - | - | - | - | - | - | - | - | - | - | - | - | - | - | - | - | - | - | 855 |
| 139 | 0.20 | 0.90 | 2.80 | 0.0027 | 0.0022 | 0.0027 | 0.0023 | 0.08 | - | - | - | - | - | - | - | - | - | - | - | - | - | - | - | - | - | - | - | - | 850 |
| 140 | 0.21 | 1.20 | 3.10 | 0.0033 | 0.0025 | 0.0021 | 0.0044 | 0.03 | - | - | - | - | - | - | - | - | - | - | - | - | - | - | - | - | - | - | - | - | 862 |

TABLE 13

[Table 13]

| No. | Chemical composition(mass% the balance: Fe and impurities) | | | | | | | | | | | | | | | | | | | | | | | | | | | Ac3 |
|-----|------|------|------|--------|--------|--------|--------|------|--------|-----|-----|-----|-----|-----|-----|-----|-----|-----|-----|-----|-----|-----|-----|-----|-----|-----|-----|-----|
|     | C | Si | Mn | P | S | N | O | Al | B | Ti | Nb | V | Mo | Cr | Co | Ni | Cu | W | Ta | Sn | Sb | As | Mg | Ca | Y | Zr | La | Ce | |
| 141 | 0.19 | 1.50 | 1.90 | 0.0039 | 0.0035 | 0.0088 | 0.0068 | 0.04 | - | - | - | - | - | - | - | - | - | - | - | - | - | - | - | - | - | - | - | - | 880 |
| 142 | 0.24 | 0.80 | 2.00 | 0.0032 | 0.0038 | 0.0056 | 0.0045 | 0.02 | - | - | - | - | - | - | - | - | - | - | - | - | - | - | - | - | - | - | - | - | 837 |
| 143 | 0.22 | 0.50 | 2.20 | 0.0039 | 0.0037 | 0.0078 | 0.0090 | 0.03 | - | - | - | - | - | - | - | - | - | - | - | - | - | - | - | - | - | - | - | - | 828 |
| 144 | 0.23 | 0.60 | 2.50 | 0.0033 | 0.0021 | 0.0072 | 0.0042 | 0.07 | - | - | - | - | - | - | - | - | - | - | - | - | - | - | - | - | - | - | - | - | 830 |
| 145 | 0.19 | 0.30 | 2.80 | 0.0028 | 0.0039 | 0.0059 | 0.0056 | 0.06 | - | - | - | - | - | - | - | - | - | - | - | - | - | - | - | - | - | - | - | - | 826 |
| 146 | 0.24 | 0.40 | 1.70 | 0.0034 | 0.0039 | 0.0071 | 0.0061 | 0.06 | - | - | - | - | - | - | - | - | - | - | - | - | - | - | - | - | - | - | - | - | 819 |
| 147 | 0.22 | 0.20 | 1.60 | 0.0019 | 0.0038 | 0.0046 | 0.0061 | 0.03 | - | - | - | - | - | - | - | - | - | - | - | - | - | - | - | - | - | - | - | - | 815 |
| 148 | 0.23 | 0.90 | 1.90 | 0.0027 | 0.0030 | 0.0027 | 0.0047 | 0.04 | - | - | - | - | - | - | - | - | - | - | - | - | - | - | - | - | - | - | - | - | 844 |
| 149 | 0.23 | 1.40 | 1.50 | 0.0020 | 0.0027 | 0.0029 | 0.0012 | 0.08 | - | - | - | - | - | - | - | - | - | - | - | - | - | - | - | - | - | - | - | - | 866 |
| 150 | 0.24 | 1.60 | 2.20 | 0.0023 | 0.0020 | 0.0083 | 0.0087 | 0.01 | - | - | - | - | - | - | - | - | - | - | - | - | - | - | - | - | - | - | - | - | 873 |
| 151 | 0.25 | 0.80 | 2.10 | 0.0026 | 0.0023 | 0.0033 | 0.0062 | - | - | - | - | - | - | - | - | - | - | - | - | - | - | - | - | - | - | - | - | - | 835 |
| 152 | 0.26 | 0.90 | 1.90 | 0.0025 | 0.0024 | 0.0012 | 0.0057 | 0.08 | - | - | - | - | - | - | - | - | - | - | - | - | - | - | - | - | - | - | - | - | 838 |
| 153 | 0.15 | 0.50 | 2.40 | 0.0011 | 0.0024 | 0.0014 | 0.0011 | 0.14 | 0.0079 | - | - | - | - | - | - | - | - | - | - | - | - | - | - | - | - | - | - | - | 845 |
| 154 | 0.50 | 0.50 | 2.80 | 0.0021 | 0.0007 | 0.0072 | 0.0028 | 0.10 | 0.0002 | - | - | - | - | - | - | - | - | - | - | - | - | - | - | - | - | - | - | - | 780 |
| 155 | 0.22 | 3.50 | 2.60 | 0.0155 | 0.0003 | 0.0173 | 0.0013 | 0.12 | 0.0011 | - | - | - | - | - | - | - | - | - | - | - | - | - | - | - | - | - | - | - | 962 |
| 156 | 0.22 | 0.50 | 0.25 | 0.0024 | 0.0162 | 0.0012 | 0.0047 | - | 0.0014 | - | - | - | - | - | - | - | - | - | - | - | - | - | - | - | - | - | - | - | 828 |
| 157 | 0.22 | 0.50 | 6.50 | 0.0013 | 0.0176 | 0.0049 | 0.0025 | 0.67 | 0.0079 | - | - | - | - | - | - | - | - | - | - | - | - | - | - | - | - | - | - | - | 828 |

Underline shows that it does not meet the claimed range.

[Table 14]

TABLE 14

| No. | Hot Rolling Heat Temp. (°C) | Hot Rolling Finish Temp. (°C) | Hot Rolling Coiling Temp. (°C) | Cold Rolling Rolling Reduction (%) | First Heat Treatment Oxygen Partial Pressure ($\times 10^{-21}$ atm) | First Heat Treatment Heat Temp. (°C) | First Heat Treatment Held Time (sec) | First Heat Treatment First-stage Cooling — Cooling Rate (°C/s) | First Heat Treatment First-stage Cooling — Stop Temp. (°C) | First Heat Treatment Cooling Rate (°C/s) | First Heat Treatment Stop Temp. (°C) | Second Heat Treatment Oxygen Partial Pressure ($\times 10^{-21}$ atm) | Second Heat Treatment Heat Temp. (°C) | Second Heat Treatment Held Time (sec) | Second Heat Treatment First-stage Cooling — Cooling Rate (°C/s) | Second Heat Treatment First-stage Cooling — Stop Temp. (°C) | Second Heat Treatment Cooling Rate (°C/s) | Second Heat Treatment Stop Temp. (°C) | Second Heat Treatment Holding Temp. (°C) | Second Heat Treatment Holding Time (sec) | Tempering Heat Temp. (°C) | Tempering Held Time (sec) | Plating Existence |
|---|---|---|---|---|---|---|---|---|---|---|---|---|---|---|---|---|---|---|---|---|---|---|---|
| a | 1230 | 860 | 340 | 61 | 631 | 870 | 250 | - | - | 90 | 160 | 399 | 860 | 300 | - | - | 40 | 160 | 310 | 300 | - | - | None |
| b | 1140 | 960 | 370 | 37 | 41,072 | 970 | 430 | - | - | 130 | 98 | 5,555 | 920 | 30 | 8.5 | 660 | 20 | 180 | 300 | 20 | - | - | Existence (Galvannealed) |
| c | 1240 | 890 | 130 | 33 | 156 | 880 | 60 | - | - | 130 | 105 | 2,379 | 900 | 310 | - | - | 90 | 160 | 30 | 270 | 300 | 300 | None |
| d | 1230 | 880 | 460 | 66 | 8,399 | 930 | 260 | - | - | 90 | 82 | 1,540 | 890 | 30 | - | - | 80 | 150 | 110 | 70 | - | - | None |
| e | 1280 | 850 | 410 | 82 | 5,555 | 920 | 50 | - | - | 120 | 116 | 8,399 | 930 | 220 | - | - | 40 | 120 | 310 | 410 | - | - | None |
| f | 1140 | 890 | 360 | 34 | 21 | 850 | 310 | - | - | 40 | 253 | 8,399 | 930 | 130 | - | - | 60 | 130 | 170 | 70 | 250 | 150 | None |
| g | 1300 | 870 | 230 | 66 | 0.01 | 870 | 170 | - | - | 130 | 126 | 27,888 | 960 | 100 | - | - | 130 | 210 | 370 | 20 | - | - | None |
| h | 1210 | 850 | 310 | 31 | 250 | 870 | 50 | - | - | 60 | 97 | 989 | 880 | 160 | - | - | 70 | 100 | 240 | 390 | - | - | None |
| i | 1300 | 960 | 520 | 90 | 18,816 | 950 | 400 | - | - | 100 | 207 | 8,399 | 930 | 40 | - | - | 110 | 50 | 340 | 460 | - | - | None |
| j | 1160 | 880 | 410 | 60 | 8,399 | 930 | 170 | - | - | 140 | 230 | 1,540 | 890 | 290 | - | - | 110 | 50 | 380 | 350 | - | - | None |
| k | 1270 | 850 | 340 | 63 | 5,555 | 920 | 30 | - | - | 100 | 83 | 8,399 | 930 | 10 | - | - | 50 | 100 | 50 | 380 | - | - | None |
| l | 1260 | 940 | 490 | 62 | 96 | 850 | 290 | - | - | 140 | 153 | 399 | 860 | 160 | - | - | 60 | 40 | 160 | 470 | - | - | Existence |
| m | 1170 | 1000 | 230 | 87 | 5,555 | 920 | 440 | - | - | 30 | 54 | 250 | 850 | 20 | - | - | 110 | 70 | 440 | 50 | - | - | Existence (Galvannealed) |
| n | 1220 | 980 | 250 | 56 | 3,648 | 910 | 20 | - | - | 140 | 101 | 1,540 | 890 | 20 | - | - | 130 | 210 | 270 | 170 | - | - | None |
| o | 1230 | 860 | 280 | 69 | 5,555 | 920 | 410 | - | - | 40 | 158 | 989 | 880 | 350 | - | - | 80 | 80 | 190 | 290 | - | - | None |
| p | 1190 | 880 | 380 | 42 | 5,555 | 920 | 380 | - | - | 110 | 183 | 399 | 860 | 100 | 5.2 | 680 | 50 | 50 | 130 | 480 | - | - | None |
| q | 1190 | 910 | 170 | 82 | 59 | 900 | 70 | 5 | 680 | 120 | 244 | 5,555 | 920 | 90 | - | - | 60 | 90 | 280 | 140 | - | - | None |
| r | 1190 | 910 | 170 | 82 | 59 | 830 | 70 | 1 | 720 | 30 | 253 | 989 | 880 | 280 | - | - | 110 | 80 | 250 | 100 | - | - | None |
| s | 1130 | 960 | 500 | 75 | 21 | 890 | 170 | - | - | 130 | 258 | 1,540 | 890 | 100 | - | - | 90 | 110 | 110 | 100 | - | - | None |
| t | 1140 | 930 | 360 | 57 | 3,648 | 910 | 90 | - | - | 130 | 114 | 1,540 | 890 | 280 | - | - | 60 | 160 | 190 | 30 | - | - | Existence (Galvannealed) |

TABLE 15

| No. | Hot Rolling | | | Cold Rolling | First Heat Treatment | | | | | | | Second Heat Treatment | | | | | | | | | Tempering | | Plating |
| | Heat Temp. (℃) | Finish Temp. (℃) | Coiling Temp. (℃) | Rolling Reduction (%) | Oxygen Partial Pressure (×10$^{-21}$atm) | Heat Temp. (℃) | Held Time (sec) | First-stage Cooling Cooling Rate (℃/s) | First-stage Cooling Stop Temp. (℃) | Cooling Rate (℃/s) | Stop Temp. (℃) | Oxygen Partial Pressure (×10$^{-21}$atm) | Heat Temp. (℃) | Held Time (sec) | First-stage Cooling Cooling Rate (℃/s) | First-stage Cooling Stop Temp. (℃) | Cooling Rate (℃/s) | Stop Temp. (℃) | Holding Temp. (℃) | Holding Time (sec) | Heat Temp. (℃) | Held Time (sec) | Existence |
|---|---|---|---|---|---|---|---|---|---|---|---|---|---|---|---|---|---|---|---|---|---|---|---|
| u | 1260 | 990 | 260 | 79 | 989 | 880 | 400 | - | - | 130 | 273 | 41,072 | 970 | 130 | - | - | 110 | 190 | 340 | 330 | - | - | None |
| v | 1110 | 860 | 400 | 83 | 21 | 920 | 380 | - | - | 120 | 134 | 3,648 | 910 | 350 | - | - | 50 | 250 | 260 | 230 | - | - | None |
| w | 1150 | 990 | 290 | 53 | 21 | 840 | 140 | - | - | 80 | 271 | 1,540 | 890 | 270 | - | - | 120 | 180 | 340 | 90 | - | - | None |
| x | 1300 | 930 | 410 | 38 | 18,816 | 950 | 420 | - | - | 100 | 174 | 0.01 | 860 | 260 | - | - | 100 | 130 | 320 | 150 | - | - | None |
| y | 1300 | 870 | 500 | 83 | 989 | 880 | 150 | - | - | 60 | 209 | 3,648 | 910 | 140 | - | - | 100 | 140 | 400 | 170 | - | - | None |
| z | 1190 | 930 | 370 | 45 | 21 | 800 | 100 | - | - | 20 | 127 | 250 | 850 | 160 | - | - | 100 | 190 | 100 | 20 | - | - | None |
| aa | 1300 | 910 | 530 | 81 | 12,613 | 940 | 470 | - | - | 60 | 216 | 2,949 | 905 | 20 | - | - | 80 | 120 | 430 | 200 | - | - | None |
| ab | 1210 | 870 | 120 | 60 | 59 | 840 | 260 | - | - | 100 | 233 | 631 | 870 | 120 | - | - | 110 | 30 | 440 | 440 | - | - | None |
| ac | 1160 | 960 | 220 | 81 | 21 | 840 | 260 | - | - | 120 | 121 | 989 | 880 | 210 | - | - | 80 | 70 | 320 | 450 | - | - | None |
| ad | 1140 | 940 | 490 | 80 | 41,072 | 970 | 30 | - | - | 120 | 143 | 8,399 | 930 | 330 | - | - | 70 | 170 | 270 | 60 | - | - | None |
| _ae_ | _1000_ | 980 | 140 | 70 | 631 | 870 | 320 | - | - | 50 | 109 | 41,072 | 970 | 60 | - | - | 130 | 160 | 40 | 200 | - | - | None |
| _af_ | 1220 | _800_ | 420 | 85 | 3,648 | 910 | 90 | - | - | 60 | 68 | 60,117 | 980 | 110 | - | - | 30 | 100 | 340 | 260 | - | - | None |
| _ag_ | 1220 | 920 | _600_ | 55 | 250 | 860 | _10_ | - | - | 150 | 255 | 989 | 880 | 290 | - | - | 80 | 110 | 280 | 380 | - | - | None |
| _ah_ | 1180 | 970 | 470 | _15_ | 41,072 | 970 | _10_ | - | - | 90 | 168 | 18,816 | 950 | 140 | - | - | 110 | 90 | 120 | 90 | - | - | Existence |
| _ai_ | 1120 | 900 | 510 | _98_ | 21 | 850 | 450 | - | - | 80 | 238 | 41,072 | 970 | 190 | - | - | 120 | 100 | 330 | 50 | - | - | None |
| _aj_ | 1130 | 990 | 160 | 72 | _0.01_ | 860 | 290 | - | - | 40 | 57 | _0.01_ | 870 | 30 | - | - | 70 | 170 | 200 | 70 | - | - | None |
| _ak_ | 1270 | 910 | 530 | 31 | 279 | _750_ | 120 | - | - | 40 | 222 | 2,379 | 900 | 150 | - | - | 70 | 200 | 170 | 480 | - | - | None |
| _al_ | 1200 | 900 | 210 | 80 | 250 | 870 | _0_ | - | - | 30 | 118 | 989 | 880 | 20 | - | - | 80 | 170 | 80 | 220 | - | - | None |
| _am_ | 1190 | 940 | 330 | 57 | 3,648 | 910 | 480 | _0.01_ | 650 | 50 | 243 | 2,379 | 900 | 180 | - | - | 50 | 60 | 380 | 100 | - | - | None |
| _an_ | 1150 | 970 | 110 | 52 | 3,648 | 910 | 290 | 1 | _600_ | 90 | 180 | 60,117 | 980 | 250 | - | - | 100 | 90 | 400 | 150 | - | - | None |

Underline shows that it does not meet the recommeded condition.

[Table 16]

EP 3 992 315 B1

TABLE 16

| No. | Hot Rolling | | | Cold Rolling | First Heat Treatment | | | | | | | Second Heat Treatment | | | | | | | | | Tempering | | Plating |
|---|---|---|---|---|---|---|---|---|---|---|---|---|---|---|---|---|---|---|---|---|---|---|---|
| | Heat Temp. (℃) | Finish Temp. (℃) | Coiling Temp. (℃) | Rolling Reduction (%) | Oxygen Partial Pressure (×10⁻²¹atm) | Heat Temp. (℃) | Held Time (sec) | First-stage Cooling Cooling Rate (℃/s) | First-stage Cooling Stop Temp. (℃) | Cooling Rate (℃/s) | Stop Temp. (℃) | Oxygen Partial Pressure (×10⁻²¹atm) | Heat Temp. (℃) | Held Time (sec) | First-stage Cooling Cooling Rate (℃/s) | First-stage Cooling Stop Temp. (℃) | Cooling Rate (℃/s) | Stop Temp. (℃) | Holding Temp. (℃) | Holding Time (sec) | Heat Temp. (℃) | Held Time (sec) | Existence |
|---|---|---|---|---|---|---|---|---|---|---|---|---|---|---|---|---|---|---|---|---|---|---|---|
| ao | 1290 | 1000 | 530 | 68 | 27,888 | 960 | 200 | - | - | <u>15</u> | 181 | 12,613 | 940 | 140 | - | - | 40 | 190 | 170 | 390 | - | - | None |
| ap | 1160 | 940 | 150 | 49 | 1,540 | 890 | 290 | - | - | 20 | <u>550</u> | 3,648 | 910 | 190 | - | - | 40 | 110 | 320 | 390 | - | - | None |
| aq | 1250 | 890 | 520 | 80 | 1.2 | 880 | 350 | - | - | 130 | 260 | 0.001 | 850 | 210 | - | - | 130 | 210 | 180 | 60 | - | - | None |
| ar | 1270 | 930 | 270 | 34 | 3,648 | 910 | 410 | - | - | 90 | 260 | 1.4 | <u>750</u> | 270 | - | - | 90 | 170 | 340 | 80 | - | - | None |
| as | 1280 | 1000 | 510 | 88 | 156 | 840 | 110 | - | - | 30 | 250 | 399 | 860 | <u>0</u> | - | - | 80 | 120 | 100 | 90 | - | - | None |
| at | 1300 | 1000 | 430 | 56 | 60,117 | 980 | 110 | - | - | 140 | 205 | 250 | 850 | 10 | <u>0.01</u> | 680 | 100 | 250 | 80 | 410 | - | - | None |
| au | 1200 | 960 | 260 | 66 | 156 | 840 | 90 | - | - | 140 | 261 | 250 | 850 | 280 | 1.2 | <u>550</u> | 70 | 100 | 210 | 90 | - | - | None |
| av | 1220 | 920 | 430 | 32 | 989 | 880 | 70 | - | - | 120 | 206 | 3,648 | 910 | 140 | - | - | <u>13</u> | 30 | 150 | 430 | - | - | None |
| aw | 1260 | 970 | 170 | 49 | 399 | 880 | 40 | - | - | 130 | 165 | 3,648 | 910 | 10 | - | - | 60 | <u>380</u> | 410 | 240 | - | - | None |
| ax | 1260 | 920 | 530 | 81 | 36 | 890 | 310 | - | - | 140 | 268 | 18,816 | 950 | 40 | - | - | 110 | 180 | <u>500</u> | 440 | - | - | None |
| ay | 1210 | 990 | 280 | 81 | 21 | 850 | 200 | - | - | 140 | 50 | 631 | 870 | 270 | - | - | 40 | 170 | 400 | 500 | - | - | None |
| az | 1170 | 940 | 530 | 35 | 250 | 850 | 220 | - | - | 20 | 180 | 2,379 | 900 | 50 | - | - | 90 | 170 | 30 | 220 | 500 | 100 | None |
| ba | 1170 | 940 | 530 | 35 | 250 | | | - | | | | 2,379 | 900 | 50 | - | - | 90 | 170 | 30 | 220 | - | - | None |
| bb | 1120 | 980 | 530 | 43 | 21 | 860 | 150 | - | - | 35 | 200 | 399 | 860 | 50 | - | - | 90 | 40 | 30 | 220 | - | - | None |
| bc | 1200 | 920 | 530 | 55 | 21 | 860 | 150 | - | - | 35 | 150 | 60,117 | 980 | 50 | - | - | 90 | 170 | 30 | 220 | - | - | None |
| bd | 1300 | 930 | 530 | 42 | 21 | 980 | 150 | - | - | 35 | 210 | 60,117 | 980 | 50 | - | - | 90 | 170 | 30 | 220 | - | - | None |
| be | 1250 | 990 | 530 | 63 | 21 | 860 | 150 | - | - | 35 | 140 | 399 | 860 | 50 | - | - | 90 | 170 | 30 | 220 | - | - | None |
| bf | 1230 | 950 | 530 | 61 | 21 | 860 | 150 | - | - | 35 | 190 | 399 | 860 | 50 | - | - | 90 | 170 | 30 | 220 | - | - | None |

Underline shows that it does not meet the recommeded condition.

36

## TABLE 17

[Table 17]

| Test No. | Steel No. | Prodction No. | Thickness t (mm) | Soft Layer Thickness $t_0$(μm) | Soft Layer $t_0/t$ (%) | F | P | B | Retained γ | M | TM | TS (MPa) | El (%) | Substrate layer Macro Hardness Average Value $Hv_{0ave}$ | Substrate layer Macro Hardness Standard Deviation | Variations in Micro Hardness (Number) | Soft Layer Hardness Average Value $Hv_{1ave}$ | Soft Layer Hardness Standard Deviation | $Hv_{1ave}/Hv_{0ave}$ | λ (%) | α (deg) | ① | TS×El | TS×λ | Evaluation | Remarks |
|---|---|---|---|---|---|---|---|---|---|---|---|---|---|---|---|---|---|---|---|---|---|---|---|---|---|---|
| 101 | 101 | a | 1.4 | 60 | 8.6 | - | - | 4 | 1 | - | 95 | 1432 | 9.8 | 450 | 26 | 8 | 356 | 28 | 0.79 | 36 | 96 | 31 | 14,038 | 51,569 | ○ | Invention Steel |
| 102 | 102 | b | 1.4 | 150 | 10.7 | 4 | - | 1 | - | - | 95 | 1169 | 11.3 | 385 | 25 | 7 | 274 | 28 | 0.71 | 45 | 98 | 33 | 13,211 | 52,612 | ○ | Invention Steel |
| 103 | 103 | c | 1.4 | 79 | 5.6 | - | - | 2 | - | - | 98 | 1517 | 9.6 | 477 | 22 | 8 | 392 | 25 | 0.82 | 37 | 90 | 25 | 14,561 | 56,120 | ○ | Invention Steel |
| 104 | 104 | d | 1.4 | 137 | 9.8 | - | - | 4 | - | - | 96 | 1575 | 9.2 | 499 | 23 | 9 | 391 | 27 | 0.78 | 34 | 85 | 20 | 14,487 | 53,540 | ○ | Invention Steel |
| 105 | 105 | e | 1.4 | 121 | 8.6 | - | - | - | - | - | 100 | 1286 | 10.2 | 405 | 21 | 8 | 259 | 24 | 0.64 | 44 | 96 | 31 | 13,117 | 56,584 | ○ | Invention Steel |
| 106 | 106 | f | 1.4 | 94 | 6.7 | - | - | - | - | - | 100 | 1534 | 8.9 | 487 | 25 | 8 | 327 | 24 | 0.67 | 31 | 89 | 24 | 13,653 | 47,556 | ○ | Invention Steel |
| 107 | 107 | g | 1.4 | 147 | 10.5 | - | - | 2 | - | - | 98 | 1256 | 10.4 | 401 | 23 | 7 | 199 | 26 | 0.50 | 39 | 114 | 49 | 13,062 | 48,984 | ○ | Invention Steel |
| 108 | 108 | h | 1.4 | 41 | 3.0 | - | - | 4 | - | - | 96 | 1439 | 9.1 | 445 | 26 | 6 | 359 | 29 | 0.81 | 39 | 96 | 31 | 13,095 | 56,121 | ○ | Invention Steel |
| 109 | 109 | i | 1.4 | 182 | 13.0 | - | - | 3 | 2 | - | 95 | 1198 | 10.9 | 392 | 28 | 5 | 239 | 28 | 0.61 | 46 | 120 | 55 | 13,058 | 55,108 | ○ | Invention Steel |
| 110 | 110 | j | 1.4 | 151 | 10.8 | - | - | 1 | - | - | 99 | 1102 | 12.6 | 338 | 27 | 7 | 257 | 30 | 0.76 | 43 | 131 | 66 | 13,885 | 47,386 | ○ | Invention Steel |
| 111 | 111 | k | 1.0 | 100 | 10.0 | - | - | 3 | 2 | - | 95 | 1671 | 9.4 | 527 | 26 | 8 | 358 | 29 | 0.68 | 28 | 78 | 10 | 15,691 | 46,788 | ○ | Invention Steel |
| 112 | 112 | l | 1.4 | 34 | 2.4 | - | - | 4 | - | - | 96 | 1881 | 8.2 | 590 | 24 | 9 | 428 | 26 | 0.73 | 25 | 70 | 5 | 15,426 | 47,030 | ○ | Invention Steel |
| 113 | 113 | m | 1.4 | 132 | 9.4 | - | - | 4 | 1 | - | 95 | 1185 | 12.3 | 376 | 26 | 9 | 282 | 29 | 0.75 | 37 | 113 | 48 | 14,570 | 43,829 | ○ | Invention Steel |
| 114 | 114 | n | 1.4 | 36 | 2.6 | - | - | 3 | - | 1 | 96 | 1456 | 9.5 | 457 | 28 | 8 | 327 | 28 | 0.72 | 23 | 95 | 30 | 13,832 | 33,488 | ○ | Invention Steel |
| 115 | 115 | o | 1.4 | 170 | 12.2 | - | - | 3 | - | - | 97 | 1709 | 8.2 | 548 | 23 | 8 | 381 | 26 | 0.70 | 25 | 76 | 11 | 13,928 | 42,723 | ○ | Invention Steel |
| 116 | 116 | p | 1.4 | 134 | 9.6 | 3 | 1 | - | - | - | 96 | 1639 | 9.6 | 517 | 23 | 6 | 438 | 26 | 0.85 | 28 | 81 | 16 | 15,704 | 45,900 | ○ | Invention Steel |
| 117 | 117 | q | 1.4 | 64 | 4.6 | - | - | - | - | - | 100 | 1294 | 10.3 | 408 | 21 | 9 | 285 | 24 | 0.70 | 42 | 110 | 45 | 13,332 | 54,365 | ○ | Invention Steel |
| 118 | 118 | r | 1.4 | 48 | 3.4 | - | - | - | - | - | 100 | 1402 | 9.5 | 440 | 20 | 8 | 354 | 23 | 0.80 | 39 | 100 | 35 | 13,323 | 54,694 | ○ | Invention Steel |
| 119 | 119 | s | 1.2 | 37 | 3.1 | - | - | - | - | - | 100 | 1515 | 8.6 | 475 | 21 | 7 | 391 | 22 | 0.82 | 37 | 90 | 23 | 13,030 | 56,061 | ○ | Invention Steel |
| 120 | 120 | t | 1.4 | 100 | 7.2 | - | - | 1 | - | - | 99 | 1561 | 8.8 | 494 | 23 | 7 | 365 | 26 | 0.74 | 29 | 86 | 21 | 13,740 | 45,279 | ○ | Invention Steel |

Underline shows it does not meet the claimed range, the recommeded condition, or the target performance.

The each symbol of the Microstructure means as follows:

F:ferrite, P:pearlite, B:bainite, TM:tempered martensite, M:as-quenched martensite

① means the calculated value of "α-$(2.37t^2-14t+80)$", and the value is good if it is 0 or more.

" - " means the microstructure was not observed.

[Table 18]

TABLE 18

| Test No. | Steel No. | Production No. | Soft Layer Thickness t (mm) | Soft Layer Thickness t₀ (μm) | t₀/t (%) | F | P | B | Retained γ | M | TM | TS (MPa) | El (%) | Substrate layer Macro Hardness Average Value Hv0ave | Standard Deviation | Variations in Micro Hardness (Number) | Soft Layer Hardness Average Value Hv1ave | Standard Deviation | Hv1ave/Hv0ave | λ (%) | α (deg) | ① | TS×El | TS×λ | Evaluation | Remarks |
|---|---|---|---|---|---|---|---|---|---|---|---|---|---|---|---|---|---|---|---|---|---|---|---|---|---|---|
| 121 | 121 | u | 1.4 | 122 | 8.7 | - | - | 2 | - | - | 98 | 1136 | 11.6 | 364 | 23 | 9 | 216 | 26 | 0.59 | 34 | 127 | 62 | 13,178 | 38,624 | ○ | Invention Steel |
| 122 | 122 | v | 1.4 | 101 | 7.2 | - | - | 2 | 2 | 1 | 95 | 1304 | 10.8 | 413 | 26 | 8 | 307 | 29 | 0.74 | 26 | 109 | 44 | 14,083 | 33,904 | ○ | Invention Steel |
| 123 | 123 | w | 1.4 | 57 | 4.1 | - | - | 2 | 2 | 1 | 95 | 1239 | 10.5 | 388 | 27 | 7 | 285 | 27 | 0.73 | 36 | 115 | 50 | 13,010 | 44,604 | ○ | Invention Steel |
| 124 | 124 | x | 1.4 | 122 | 8.7 | - | - | 3 | - | - | 97 | 1137 | 11.6 | 373 | 23 | 7 | 207 | 26 | 0.56 | 42 | 127 | 62 | 13,190 | 47,757 | ○ | Invention Steel |
| 125 | 125 | y | 1.4 | 90 | 6.5 | - | - | - | - | - | 100 | 1165 | 12.6 | 333 | 21 | 8 | 215 | 24 | 0.65 | 40 | 123 | 58 | 14,679 | 46,600 | ○ | Invention Steel |
| 126 | 126 | z | 1.4 | 80 | 5.7 | - | - | 3 | - | 2 | 95 | 1891 | 8.1 | 592 | 28 | 8 | 467 | 26 | 0.79 | 20 | 76 | 11 | 15,336 | 37,819 | ○ | Invention Steel |
| 127 | 127 | aa | 1.4 | 177 | 12.6 | - | - | 3 | 2 | - | 95 | 1132 | 11.6 | 309 | 27 | 7 | 197 | 30 | 0.64 | 39 | 127 | 62 | 13,131 | 44,148 | ○ | Invention Steel |
| 128 | 128 | ab | 1.4 | 32 | 2.3 | - | - | 4 | - | - | 96 | 1145 | 12.3 | 317 | 26 | 9 | 242 | 29 | 0.76 | 31 | 126 | 61 | 14,084 | 35,495 | ○ | Invention Steel |
| 129 | 129 | ac | 1.4 | 43 | 3.1 | - | - | 3 | 2 | - | 95 | 1236 | 11.7 | 388 | 26 | 8 | 314 | 24 | 0.81 | 34 | 116 | 51 | 14,465 | 42,035 | ○ | Invention Steel |
| 130 | 130 | ad | 1.4 | 102 | 7.3 | - | - | 3 | 1 | - | 96 | 1265 | 11.6 | 409 | 25 | 8 | 282 | 28 | 0.69 | 37 | 113 | 48 | 14,669 | 46,789 | ○ | Invention Steel |
| 131 | 131 | ae | 1.4 | 171 | 12.2 | - | - | 4 | - | - | 96 | 1999 | 8.2 | 650 | 24 | 18 | 336 | 25 | 0.52 | 16 | 68 | 3 | 16,391 | 31,982 | × | Comparative Steel |
| 132 | 132 | af | It cannot be tested due to shape defect of hot rolled plate. | | | | | | | | | | | | | | | | | | | | | | × | Comparative Steel |
| 133 | 133 | ag | 1.4 | 48 | 3.4 | - | - | 5 | - | - | 95 | 1720 | 8.3 | 542 | 25 | 16 | 338 | 28 | 0.62 | 18 | 75 | 10 | 14,277 | 30,961 | × | Comparative Steel |
| 134 | 134 | ah | It cannot be tested due to shape defect of cold rolled plate. | | | | | | | | | | | | | | | | | | | | | | × | Comparative Steel |
| 135 | 135 | ai | It cannot be tested due to excessive cold rolling load. | | | | | | | | | | | | | | | | | | | | | | × | Comparative Steel |
| 136 | 136 | aj | 1.4 | 70 | 5.0 | - | - | - | - | - | 100 | 1498 | 9.2 | 465 | 22 | 8 | 421 | 28 | 0.91 | 28 | 62 | -3 | 13,783 | 41,947 | × | Comparative Steel |
| 137 | 137 | ak | 1.4 | 64 | 4.6 | - | - | 5 | - | - | 95 | 1492 | 9.1 | 470 | 24 | 12 | 359 | 24 | 0.76 | 20 | 92 | 27 | 13,575 | 29,835 | × | Comparative Steel |
| 138 | 138 | al | 1.4 | 21 | 1.5 | - | - | 3 | 1 | 1 | 95 | 1614 | 8.8 | 505 | 25 | 11 | 414 | 24 | 0.82 | 20 | 82 | 17 | 14,207 | 32,289 | × | Comparative Steel |
| 139 | 139 | am | 1.4 | 161 | 11.5 | - | - | - | - | - | 100 | 1090 | 12.6 | 349 | 22 | 13 | 243 | 22 | 0.70 | 30 | 132 | 67 | 13,731 | 32,694 | × | Comparative Steel |
| 140 | 140 | an | 1.4 | 220 | 15.7 | - | - | - | - | - | 100 | 942 | 15.1 | 325 | 21 | 11 | 169 | 27 | 0.52 | 45 | 63 | -2 | 14,222 | 42,384 | × | Comparative Steel |

Underline shows it does not meet the claimed range, the recommended condition, or the target performance.

The each symbol of the Microstructure means as follows:

F:ferrite, P:pearlite, B:bainite, TM:tempered martensite, M:as-quenched martensite

① means the calculated value of "α-(2.37t²-14t+80)", and the value is good if it is 0 or more.

"-" means the microstructure was not observed.

[Table 19]

**TABLE 19**

| Test No. | Steel No. | Production No. | Thickness t (mm) | Soft Layer Thickness t_D (μm) | t_D/t (%) | F | P | B | Retained γ | M | TM | TS (MPa) | El (%) | Substrate layer Macro Hardness Average Value HV_lave | Macro Std Deviation | Variations in Micro Hardness (Number) | Soft Layer Average Value HV_lave | Soft Std Deviation | HV_lave/HV_lave | λ (%) | α (deg) | ① | Crash Resistance TS×El | Crash Resistance TS×λ | Evaluation | Remarks |
|---|---|---|---|---|---|---|---|---|---|---|---|---|---|---|---|---|---|---|---|---|---|---|---|---|---|---|
| 141 | 141 | ao | 1.4 | 303 | 21.6 | - | - | 2 | - | - | 98 | 1350 | 9.7 | 439 | 24 | 12 | 320 | 29 | 0.73 | 23 | 105 | 40 | 13,090 | 31,039 | × | Comparative Steel |
| 142 | 142 | ap | 1.4 | 123 | 8.8 | - | - | - | - | - | 100 | 1293 | 10.6 | 412 | 23 | 13 | 272 | 25 | 0.66 | 25 | 110 | 45 | 13,701 | 32,313 | × | Comparative Steel |
| 143 | 143 | aq | 1.4 | 8 | 0.6 | - | - | - | 1 | - | 96 | 1504 | 8.8 | 470 | 22 | 7 | 278 | 28 | 0.59 | 29 | 64 | -1 | 13,186 | 43,604 | × | Comparative Steel |
| 144 | 144 | ar | 1.4 | 101 | 7.2 | 90 | 10 | - | - | - | 0 | 430 | 55.0 | 395 | 45 | 20 | 194 | 36 | 0.49 | 56 | 239 | 174 | 23,650 | 24,080 | × | Comparative Steel |
| 145 | 145 | as | 1.4 | 50 | 3.6 | - | - | - | - | - | 96 | 1513 | 9.9 | 473 | 24 | 22 | 446 | 28 | 0.94 | 19 | 56 | -9 | 14,978 | 28,745 | × | Comparative Steel |
| 146 | 146 | at | 1.4 | 80 | 5.7 | 34 | - | - | - | - | 66 | 1057 | 25.7 | 493 | 40 | 21 | 472 | 29 | 0.96 | 23 | 62 | -3 | 27,144 | 24,311 | × | Comparative Steel |
| 147 | 147 | au | 1.4 | 90 | 6.4 | 39 | - | - | - | - | 61 | 1021 | 28.3 | 458 | 39 | 18 | 430 | 28 | 0.94 | 26 | 63 | -2 | 28,874 | 26,546 | × | Comparative Steel |
| 148 | 148 | av | 1.4 | 80 | 5.7 | 10 | - | 40 | 3 | - | 47 | 960 | 17.1 | 480 | 38 | 8 | 354 | 26 | 0.74 | 34 | 148 | 83 | 16,378 | 32,640 | × | Comparative Steel |
| 149 | 149 | aw | 1.4 | 100 | 7.1 | - | - | 60 | 5 | - | 35 | 1122 | 14.1 | 352 | 32 | 9 | 207 | 29 | 0.59 | 22 | 128 | 63 | 15,820 | 24,684 | × | Comparative Steel |
| 150 | 150 | ax | 1.4 | 82 | 5.9 | - | - | - | - | - | 100 | 990 | 10.6 | 282 | 18 | 16 | 95 | 30 | 0.34 | 32 | 144 | 79 | 10,494 | 31,680 | × | Comparative Steel |
| 151 | 151 | ay | 1.4 | 150 | 10.7 | - | - | - | - | - | 100 | 1530 | 8.9 | 372 | 22 | 8 | 274 | 27 | 0.74 | 46 | 89 | 24 | 13,617 | 70,380 | ○ | Invention Steel |
| 152 | 152 | az | 1.4 | 55 | 3.9 | - | - | - | - | - | 100 | 1610 | 8.4 | 521 | 23 | 9 | 392 | 29 | 0.75 | 44 | 83 | 18 | 13,524 | 70,840 | ○ | Invention Steel |
| 153 | 152 | ba | 1.4 | 60 | 4.3 | - | - | - | - | - | 100 | 1666 | 8.0 | 522 | 28 | 16 | 392 | 27 | 0.75 | 19 | 79 | 14 | 13,331 | 31,661 | × | Comparative Steel |
| 154 | 153 | bb | 1.4 | 140 | 10.0 | - | - | - | - | - | 100 | 1468 | 8.0 | 958 | 26 | 8 | 334 | 25 | 0.35 | 24 | 94 | 29 | 11,744 | 35,233 | × | Comparative Steel |
| 155 | 154 | bc | 1.4 | 154 | 11.0 | - | 2 | 3 | - | - | 95 | 2920 | 9.4 | 958 | 25 | 9 | 334 | 24 | 0.35 | 8 | 35 | -30 | 27,421 | 23,362 | × | Comparative Steel |
| 156 | 155 | bd | 1.4 | 60 | 4.3 | - | - | 2 | - | - | 98 | 1591 | 8.1 | 498 | 23 | 9 | 458 | 26 | 0.92 | 18 | 53 | -12 | 12,889 | 28,641 | × | Comparative Steel |
| 157 | 156 | be | 1.4 | 60 | 4.3 | - | - | - | - | - | 100 | 1591 | 8.0 | 498 | 22 | 8 | 458 | 27 | 0.92 | 19 | 54 | -11 | 12,729 | 30,232 | × | Comparative Steel |
| 158 | 157 | bf | 1.4 | 60 | 4.3 | - | - | - | - | - | 100 | 1591 | 8.0 | 498 | 22 | 9 | 458 | 29 | 0.92 | 18 | 53 | -12 | 12,729 | 28,641 | × | Comparative Steel |

Underline shows it does not meet the claimed range, the recommeded condition, or the target performance.

The each symbol of the Microstructure means as follows:

F:ferrite, P:pearlite, B:bainite, TM:tempered martensite, M:as-quenched martensite

① means the calculated value of "$\alpha - (2.37t^2 - 14t + 80)$", and the value is good if it is 0 or more.

"-" means the microstructure was not observed.

As shown in Tables 7 to 10, steel sheets according to Test Nos. 1 to 30, which satisfied the definition according to the present invention, had high strength and excellent crash resistance. In contrast, steel sheets according to Test Nos. 31 to 82, which did not satisfy any one or more of the macro hardness, the micro hardness, and the tensile strength according to the present invention, were poor in crash resistance.

As shown in Tables 17 to 20, steel sheets according to Test Nos. 101 to 130, 151, and 152, which satisfied the definition according to the present invention, had high strength and excellent crash resistance. In contrast, steel sheets according to Test Nos. 131 to 150 and 153 to 158, which did not satisfy any one or more of the steel micro-structure, the chemical composition, the macro hardness, and the micro hardness of a substrate layer and the thickness and the tensile strength, and the hardness of a soft layer according to the present invention, were poor at least in crash resistance.

INDUSTRIAL APPLICABILITY

According to the present invention, a steel sheet that establishes compatibility between high strength (specifically a tensile strength of 1100 MPa or more) and excellent crash resistance is obtained.

REFERENCE SIGNS LIST

10      steel sheet
10a    surface of steel sheet
t        sheet thickness
A       region for measurement of macro hardness
B       region for measurement of micro hardness

**Claims**

1.  A steel sheet having a tensile strength of 1100 MPa or more and TS × El of 13000 or more, where TS is the tensile strength, in MPa, and El is the elongation, in %,

    wherein the steel sheet has a micro-structure containing, in volume fraction, tempered martensite: 95% or more, and one or more kinds of ferrite, pearlite, bainite, as-quenched martensite, and retained austenite: less than 5% in total,
    wherein in a cross section parallel to a sheet-thickness direction of the steel sheet, when a sheet thickness is denoted by t,
    in a 300-μm-square region centered about a t/2 point, a standard deviation of Vickers hardnesses that are measured under a load of 9.8 N at 30 points is 30 or less,
    wherein when a 100-μm-square region centered about a t/2 point is divided into 10×10, 100 subregions, and at a center of each of the subregions, a nano hardness is measured under a maximum load of 1 mN, out of the subregions, the number of subregions each of which makes a difference in nano hardness of 3 GPa or more from any one of eight surrounding subregions is 10 or less, and
    wherein the steel sheet has a chemical composition comprising, in mass%:

    C: 0.18% or more to 0.40% or less,
    Si: 0.01% or more to 2.50% or less,
    Mn: 0.60% or more to 5.00% or less,
    P: 0.0200% or less,
    S: 0.0200% or less,
    N: 0.0200% or less,
    O: 0.0200% or less,
    Al: 0% or more to 1.00% or less,
    Cr: 0% or more to 2.00% or less,
    Mo: 0% or more to 0.50% or less,
    Ti: 0% or more to 0.10% or less,
    Nb: 0% or more to 0.100% or less,
    B: 0% or more to 0.0100% or less,
    V: 0% or more to 0.50% or less,
    Cu: 0% or more to 0.500% or less,
    W: 0% or more to 0.100% or less,
    Ta: 0% or more to 0.100% or less,
    Ni: 0% or more to 1.00% or less,
    Co: 0% or more to 1.00% or less,
    Sn: 0% or more to 0.050% or less,
    Sb: 0% or more to 0.050% or less,
    As: 0% or more to 0.050% or less,
    Mg: 0% or more to 0.050% or less,
    Ca: 0% or more to 0.050% or less,
    Y: 0% or more to 0.050% or less,

Zr: 0% or more to 0.050% or less,
La: 0% or more to 0.050% or less,
Ce: 0% or more to 0.050% or less, and
the balance: Fe and impurities, and wherein,

the tensile strength, the elongation, the volume fractions of tempered martensite, ferrite, pearlite, bainite, as-quenched martensite, and retained austenite, the standard deviation of Vickers hardnesses that are measured under a load of 9.8 N at 30 points, and the number of subregions each of which makes a difference in nano hardness of 3 GPa or more from any one of eight surrounding subregions, are measured as described in the description,
optionally the steel sheet having a substrate layer and a soft layer formed on at least one of surfaces of the substrate layer,
wherein a thickness of the soft layer is more than 10 $\mu$m to 0.15t or less per side,
wherein at a 10 $\mu$m point from a surface of the soft layer, a standard deviation of Vickers hardnesses that are measured under a load of 4.9 N at 150 points is 30 or less, and
wherein an average Vickers hardness $Hv_1$ of the soft layer is 0.9 times or less an average Vickers hardness $Hv_0$ at a t/2 point, and wherein

the standard deviation of Vickers hardnesses that are measured under a load of 4.9 N at 150 points, average Vickers hardness $Hv_1$ of the soft layer, and average Vickers hardness $Hv_0$ at a t/2 point are measured as described in the description.

**2.** The steel sheet according to claim 1, including a galvanized layer, a galvannealed layer, or an electrogalvanized layer on its surface.

**Patentansprüche**

**1.** Stahlblech mit einer Zugfestigkeit von 1100 MPa oder mehr und einem TS $\times$ El von 13000 oder mehr, wobei TS die Zugfestigkeit in MPa und El die Dehnung in % ist,

wobei das Stahlblech eine Mikrostruktur aufweist, die, in Volumenanteilen, angelassenen Martensit: 95% oder mehr, und eine oder mehrere Arten von Ferrit, Perlit, Bainit, Martensit im abgeschreckten Zustand und Restaustenit: insgesamt weniger als 5% enthält,
wobei in einem Querschnitt parallel zur Blechdickenrichtung des Stahlblechs, wenn eine Blechdicke mit t bezeichnet wird,
in einem 300-$\mu$m-im-Quadrat großen Bereich, der um einen t/2 Punkt zentriert ist, eine Standardabweichung der Vickershärten, die unter einer Last von 9,8 N an 30 Punkten gemessen werden, 30 oder weniger beträgt,
wobei, wenn ein 100-$\mu$m-im-Quadrat großer Bereich, der um einen t/2 Punkt zentriert ist, in 10$\times$10, 100 Unterbereiche unterteilt wird, und in einem Zentrum jedes der Unterbereiche eine Nanohärte unter einer maximalen Last von 1 mN gemessen wird, unter den Unterbereichen die Anzahl der Unterbereiche, von denen jeder eine Differenz in der Nanohärte von 3 GPa oder mehr in Bezug auf irgendeinen der acht umgebenden Teilbereiche aufweist, 10 oder weniger beträgt, und
wobei das Stahlblech eine chemische Zusammensetzung aufweist, die umfasst, in Masse-%:

C: 0,18% oder mehr bis 0,40% oder weniger,
Si: 0,01% oder mehr bis 2,50% oder weniger,
Mn: 0,60% oder mehr bis 5,00% oder weniger,
P: 0,0200% oder weniger,
S: 0,0200% oder weniger,
N: 0,0200% oder weniger,
O: 0,0200% oder weniger,
Al: 0% oder mehr bis 1,00% oder weniger,
Cr: 0% oder mehr bis 2,00% oder weniger,
Mo: 0% oder mehr bis 0,50% oder weniger,
Ti: 0% oder mehr bis 0,10% oder weniger,
Nb: 0% oder mehr bis 0,100% oder weniger,
B: 0% oder mehr bis 0,0100% oder weniger,

V: 0% oder mehr bis 0,50% oder weniger,

Cu: 0% oder mehr bis 0,500% oder weniger,

W: 0% oder mehr bis 0,100% oder weniger,

Ta: 0% oder mehr bis 0,100% oder weniger,

Ni: 0% oder mehr bis 1,00% oder weniger,

Co: 0% oder mehr bis 1,00% oder weniger,

Sn: 0% oder mehr bis 0,050% oder weniger,

Sb: 0% oder mehr bis 0,050% oder weniger,

As: 0% oder mehr bis 0,050% oder weniger,

Mg: 0% oder mehr bis 0,050% oder weniger,

Ca: 0% oder mehr bis 0,050% oder weniger,

Y: 0% oder mehr bis 0,050% oder weniger,

Zr: 0% oder mehr bis 0,050% oder weniger,

La: 0% oder mehr bis 0,050% oder weniger,

Ce: 0% oder mehr bis 0,050% oder weniger, und

der Rest: Fe und Verunreinigungen, und wobei

die Zugfestigkeit, die Dehnung, die Volumenanteile von angelassenem Martensit, Ferrit, Perlit, Bainit, Martensit im abgeschreckten Zustand und Restaustenit, die Standardabweichung der Vickershärten, die unter einer Last von 9,8 N an 30 Punkten gemessen werden, und die Anzahl der Unterbereiche, von denen jeder eine Differenz in der Nano-Härte von 3 GPa oder mehr in Bezug auf irgendeinen der acht umgebenden Unterbereiche aufweist, wie in der Beschreibung beschrieben gemessen werden,

optional weist das Stahlblech eine Substratschicht und eine Weichschicht auf, die auf mindestens einer der Oberflächen der Substratschicht ausgebildet ist,

wobei eine Dicke der Weichschicht mehr als 10 $\mu$m bis 0,15t oder weniger pro Seite beträgt,

wobei an einem 10 $\mu$m Punkt von einer Oberfläche der Weichschicht entfernt eine Standardabweichung der Vickershärten, die unter einer Last von 4,9 N an 150 Punkten gemessen werden, 30 oder weniger beträgt, und wobei eine durchschnittliche Vickershärte $Hv_1$ der Weichschicht das 0,9-fache oder weniger einer durchschnittlichen Vickershärte $Hv_0$ an einem t/2 Punkt beträgt, und wobei

die Standardabweichung der Vickershärten, die unter einer Last von 4,9 N an 150 Punkten gemessen werden, die durchschnittliche Vickershärte $Hv_1$ der Weichschicht und die durchschnittliche Vickershärte $Hv_0$ an einem t/2 Punkt wie in der Beschreibung beschrieben gemessen werden.

2. Stahlblech nach Anspruch 1, das eine verzinkte Schicht, eine verzinkt-geglühte Schicht oder eine elektrolytisch-verzinkte Schicht auf seiner Oberfläche umfasst.

**Revendications**

1. Tôle d'acier ayant une résistance à la traction de 1100 MPa ou plus et TS × E1 de 13000 ou plus, où TS est la résistance à la traction, en MPa, et E1 est l'allongement, en %,

où la tôle d'acier a une microstructure contenant, en fraction volumique, de la martensite revenue: 95 % ou plus, et un ou plusieurs types de ferrite, de perlite, de bainite, de martensite trempée et d'austénite résiduelle: moins de 5 % au total,

où dans une section transversale parallèle à une direction d'épaisseur de tôle de la tôle d'acier, lorsqu'une épaisseur de tôle est désignée par t,

dans une région carrée de 300 $\mu$m centrée autour d'un point t/2, un écart-type de duretés Vickers mesurées sous une charge de 9,8 N en 30 points est 30 ou moins,

où lorsqu'une région carrée de 100 $\mu$m centrée autour d'un point t/2 est divisée en 10x10, 100 sous-régions, et à un centre de chacune des sous-régions, une dureté nanométrique est mesurée sous une charge maximale de 1 mN, parmi les sous-régions, le nombre de sous-régions dont chacune fait une différence de dureté nanométrique de 3 GPa ou plus par rapport à l'une quelconque des huit sous-régions environnantes est 10 ou moins, et

où la tôle d'acier a une composition chimique comprenant, en % en masse:

C: 0,18 % ou plus à 0,40 % ou moins,

Si: 0,01 % ou plus à 2,50 % ou moins,

Mn: 0,60 % ou plus à 5,00 % ou moins,

P: 0,0200 % ou moins,

S: 0,0200 % ou moins,

N: 0,0200 % ou moins,

O: 0,0200 % ou moins,

Al: 0 % ou plus à 1,00 % ou moins,

Cr: 0 % ou plus à 2,00 % ou moins,

Mo: 0 % ou plus à 0,50 % ou moins,

Ti: 0 % ou plus à 0,10 % ou moins,

Nb: 0 % ou plus à 0,100 % ou moins,

B: 0 % ou plus à 0,0100 % ou moins,

V: 0 % ou plus à 0,50 % ou moins,

Cu: 0 % ou plus à 0,500 % ou moins,

W: 0 % ou plus à 0,100 % ou moins,

Ta: 0 % ou plus à 0,100 % ou moins,

Ni: 0 % ou plus à 1,00 % ou moins,

Co: 0 % ou plus à 1,00 % ou moins,

Sn: 0 % ou plus à 0,050 % ou moins,

Sb: 0 % ou plus à 0,050 % ou moins,

As: 0 % ou plus à 0,050 % ou moins,

Mg: 0 % ou plus à 0,050 % ou moins,

Ca: 0 % ou plus à 0,050 % ou moins,

Y: 0 % ou plus à 0,050 % ou moins,

Zr: 0 % ou plus à 0,050 % ou moins,

La: 0 % ou plus à 0,050 % ou moins,

Ce: 0 % ou plus à 0,050 % ou moins, et

le reste: Fe et impuretés, et où,

la résistance à la traction, l'allongement, les fractions volumiques de martensite revenue, de ferrite, de perlite, de bainite, de martensite trempée et d'austénite résiduelle, l'écart type des duretés Vickers qui sont mesurées sous une charge de 9,8 N en 30 points, et le nombre de sous-régions dont chacune fait une différence de dureté nanométrique de 3 GPa ou plus par rapport à l'une quelconque des huit sous-régions environnantes, sont mesurés comme décrit dans la description,

éventuellement la tôle d'acier ayant une couche de substrat et une couche molle formée sur au moins l'une des surfaces de la couche de substrat,

où une épaisseur de la couche molle est supérieure à 10 $\mu$m à 0,15t ou moins par côté,

où à un point de 10 $\mu$m d'une surface de la couche molle, un écart type des duretés Vickers qui sont mesurées sous une charge de 4,9 N en 150 points est 30 ou moins, et

où une dureté Vickers moyenne $Hv_1$ de la couche molle est 0,9 fois ou moins une dureté Vickers moyenne $Hv_0$ à un point t/2, et où l'écart type des duretés Vickers qui sont mesurées sous une charge de 4,9 N en 150 points, la dureté Vickers moyenne $Hv_1$ de la couche molle et la dureté Vickers moyenne Hv, en un point t/2 sont mesurées comme décrit dans la description.

2. Tôle d'acier selon la revendication 1, incluant une couche galvanisée, une couche trempée après galvanisation ou une couche électrogalvanisée sur sa surface.

Figure 1

**REFERENCES CITED IN THE DESCRIPTION**

**Patent documents cited in the description**

- JP 2013227614 A
- JP 2015117403 A
- WO 2009110607 A
- JP 2009215571 A
- EP 3467135 A1